(19) **Europäisches Patentamt / European Patent Office / Office européen des brevets**

(11) **EP 4 200 755 B1**

(12) **EUROPEAN PATENT SPECIFICATION**

(45) Date of publication and mention of the grant of the patent:
**28.01.2026 Bulletin 2026/05**

(21) Application number: **21759501.6**

(22) Date of filing: **30.07.2021**

(51) International Patent Classification (IPC):
$G06N\ 3/04$ (2023.01)　　$G06N\ 3/08$ (2023.01)
$G06N\ 3/063$ (2023.01)　　$H04L\ 1/00$ (2006.01)

(52) Cooperative Patent Classification (CPC):
**G06N 3/088; G06N 3/045; G06N 3/0455;**
**G06N 3/047; G06N 3/0499; G06N 3/098;**
G06N 3/063; H04L 1/0029

(86) International application number:
**PCT/US2021/071073**

(87) International publication number:
**WO 2022/040655 (24.02.2022 Gazette 2022/08)**

(54) **FEDERATED LEARNING OF AUTOENCODER PAIRS FOR WIRELESS COMMUNICATION**

FÖDERIERTES LERNEN VON AUTOENCODERPAAREN ZUR DRAHTLOSEN KOMMUNIKATION

APPRENTISSAGE FÉDÉRÉ DE PAIRES D'AUTOCODEUR POUR COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2020 GR 20200100498**

(43) Date of publication of application:
**28.06.2023 Bulletin 2023/26**

(73) Proprietor: **QUALCOMM INCORPORATED**
San Diego, California 92121-1714 (US)

(72) Inventors:
- **NAMGOONG, June**
  San Diego, California 92121 (US)
- **YOO, Taesang**
  San Diego, California 92121 (US)
- **BHUSHAN, Naga**
  San Diego, California 92121 (US)
- **VITTHALADEVUNI, Pavan Kumar**
  San Diego, California 92121 (US)
- **SUNDARARAJAN, Jay Kumar**
  San Diego, California 92121 (US)
- **MANOLAKOS, Alexandros**
  San Diego, California 92121 (US)
- **MUKKAVILLI, Krishna Kiran**
  San Diego, California 92121 (US)
- **KWON, Hwan Joon**
  San Diego, California 92121 (US)
- **JI, Tingfang**
  San Diego, California 92121 (US)
- **CHEN, Wanshi**
  San Diego, California 92121 (US)

(74) Representative: **Tomkins & Co**
**5 Dartmouth Road**
**Dublin 6, D06 F9C7 (IE)**

(56) References cited:
**US-A1- 2019 287 217**

- **HONGYUAN YE ET AL: "Deep Learning based Denoise Network for CSI Feedback in FDD Massive MIMO Systems", ARXIV.ORG, CORNELL UNIVERSITY LIBRARY, 201 OLIN LIBRARY CORNELL UNIVERSITY ITHACA, NY 14853, 16 April 2020 (2020-04-16), XP081645766**
- **ELMOSSALLAMY MOHAMED A ET AL: "Noncoherent MIMO Codes Construction Using Autoencoders", 2019 IEEE GLOBAL COMMUNICATIONS CONFERENCE (GLOBECOM), IEEE, 9 December 2019 (2019-12-09), pages 1 - 6, XP033722039, DOI: 10.1109/GLOBECOM38437.2019.9013199**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### CROSS-REFERENCE TO RELATED APPLICATION

This Patent Application claims priority to Greece Patent Application No. 20200100498, filed on August 18, 2020, entitled "FEDERATED LEARNING OF AUTOENCODER PAIRS FOR WIRELESS COMMUNICATION," and assigned to the assignee hereof.

### INTRODUCTION

Aspects of the present disclosure generally relate to wireless communication and to techniques and apparatuses for channel state information reporting.

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A UE may communicate with a BS via the downlink and uplink. "Downlink" (or forward link) refers to the communication link from the BS to the UE, and "uplink" (or reverse link) refers to the communication link from the UE to the BS. As will be described in more detail herein, a BS may be referred to as a Node B, a gNB, an access point (AP), a radio head, a transmit receive point (TRP), a new radio (NR) BS, a 5G Node B, or the like.

The above multiple access technologies have been adopted in various telecommunication standards to provide a common protocol that enables different user equipment to communicate on a municipal, national, regional, and even global level. NR, which may also be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. However, as the demand for mobile broadband access continues to increase, there exists a need for further improvements in LTE and NR technologies. Preferably, these improvements should be applicable to other multiple access technologies and the telecommunication standards that employ these technologies. US 2019/287217 describes aspects of a machine learning system for reduced network bandwidth transmission of content. Hongyuan Ye et al: "Deep Learning based Denoise Network for CSI Feedback in FDD Massive MIMO Systems", ARXIV.ORG, CORNELL UNIVERSITY LIBRARY, 201 OLIN LIBRARY CORNELL UNIVERSITY ITHACA; NY 14853, 16 April 2020 (2020-04-16), XP081645766 describes aspects of a Deep Learning based Denoise Network for CSI feedbck in MIMO systems.

### SUMMARY

The invention is defined by the independent claims 1, 12, 14, and 15.

In some aspects, a method of wireless communication performed by a client includes determining, using a first client autoencoder, a feature vector associated with one or more features associated with an environment of the client. The method may include determining a latent vector using a second client autoencoder and based at least in part on the feature vector. The method may further include transmitting the feature vector and the latent vector.

In some aspects, a method of wireless communication performed by a server includes receiving, from a client, a feature vector associated with one or more features associated with an environment of the client. The method may include receiving, from the client, a latent vector that is based at least in part on the feature vector. The method may include determining an observed wireless communication vector based at least in part on the feature vector and the latent vector. The method may further include performing a wireless communication action based at least in part on determining the observed wireless communication vector.

In some aspects, a client for wireless communication includes a memory and one or more processors coupled to the memory. The memory and the one or more processors are configured to determine, using a first client autoencoder, a feature vector associated with one or more features associated with an environment of the client. The memory and the one or more processors are further configured to determine a latent vector using a second client autoencoder and based at least in part on the feature vector. The memory and the one or more processors are further configured to transmit the feature vector and the latent vector.

In some aspects, a server for wireless communication includes a memory and one or more processors coupled to the memory. The memory and the one or more processors are configured to receive, from a client, a feature vector associated with one or more features associated with an environment of the client. The memory and the one or more processors are further configured to receive, from the client, a latent vector that is based at least in part on the feature vector. The memory and the one or more processors are further configured to determine an observed wireless communication vector based at least in part on the feature vector and the latent vector. The memory and the one or more processors are further configured to perform a wireless communication action based at least in part on determining the observed wireless communication vector.

In some aspects, a non-transitory computer-readable medium storing a set of instructions for wireless communication includes one or more instructions that, when executed by one or more processors of a client, cause the client to determine, using a first client autoencoder, a feature vector associated with one or more features associated with an environment of the client. The one or more instructions may further cause the client to determine a latent vector using a second client autoencoder and based at least in part on the feature vector. The one or more instructions may further cause the client to transmit the feature vector and the latent vector.

In some aspects, a non-transitory computer-readable medium storing a set of instructions for wireless communication includes one or more instructions that, when executed by one or more processors of a server, cause the server to receive, from a client, a feature vector associated with one or more features associated with an environment of the client. The one or more instructions may further cause the server to receive, from the client, a latent vector that is based at least in part on the feature vector. The one or more instructions may further cause the server to determine an observed wireless communication vector based at least in part on the feature vector and the latent vector. The one or more instructions may further cause the server to perform a wireless communication action based at least in part on determining the observed wireless communication vector.

In some aspects, an apparatus for wireless communication includes means for determining, using a first autoencoder, a feature vector associated with one or more features associated with an environment of the apparatus. The apparatus further includes means for determining a latent vector using a second autoencoder and based at least in part on the feature vector. The apparatus further includes means for transmitting the feature vector and the latent vector.

In some aspects, an apparatus for wireless communication includes means for receiving, from a client, a feature vector associated with one or more features associated with an environment of the client. The apparatus further includes means for receiving, from the client, a latent vector that is based at least in part on the feature vector. The apparatus further includes means for determining an observed wireless communication vector based at least in part on the feature vector and the latent vector. The apparatus further includes means for performing a wireless communication action based at least in part on determining the observed wireless communication vector.

Aspects generally include a method, apparatus, system, computer program product, non-transitory computer-readable medium, client, server, user equipment, base station, wireless communication device, and/or processing system as substantially described with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purpose of illustration and description, and not as a definition of the limits of the claims.

BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.

Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.

Fig. 3 is a diagram illustrating an example of wireless communication using an autoencoder pair, in accordance with the present disclosure.

Fig. 4 is a diagram illustrating an example of a directed graphical model corresponding to an autoencoder pair, in accordance with the present disclosure.

Fig. 5 is a diagram illustrating an example of an autoencoder pair, in accordance with the present disclosure.

Fig. 6 is a diagram illustrating an example of wireless communication using an autoencoder pair, in accordance with the present disclosure.

Fig. 7 is a diagram illustrating an example of fully federated learning for an autoencoder pair, in accordance with the present disclosure.

Fig. 8 is a diagram illustrating an example of partially federated learning for an autoencoder pair, in accordance with the present disclosure.

Figs. 9-17 are diagrams illustrating examples of federated learning for autoencoder pairs, in accordance with the present disclosure.

Figs. 18 and 19 are diagrams illustrating example processes associated with federated learning for autoencoder pairs, in accordance with the present disclosure.

Figs. 20 and 21 are examples of apparatuses for wireless communication, in accordance with the present disclosure.

Figs. 22 and 23 are diagrams illustrating examples of a hardware implementation for an apparatus employing a processing system, in accordance with the present disclosure.

Figs. 24 and 25 are diagrams illustrating examples of implementations of code and circuitry for an apparatus, in accordance with the present disclosure.

DETAILED DESCRIPTION

A client operating in a network may measure reference signals and/or the like to report to a server. For example, the client may measure reference signals during a beam management process for channel state feedback (CSF), may measure received power of reference signals from a serving cell and/or neighbor cells, may measure signal strength of inter-radio access technology (e.g., WiFi) networks, may measure sensor signals for detecting locations of one or more objects within an environment, and/or the like. However, reporting this information to the server may consume communication and/or network resources.

In some aspects described herein, a client (e.g., a UE, a base station, a transmit receive point (TRP), a network device, a low-earth orbit (LEO) satellite, a medium-earth orbit (MEO) satellite, a geostationary earth orbit (GEO) satellite, a high elliptical orbit (HEO) satellite, and/or the like) may use one or more neural networks that may be trained to learn dependence of measured qualities on individual parameters, isolate the measured qualities through various layers of the one or more neural networks (also referred to as "operations"), and compress measurements in a way that limits compression loss. The client may transmit the compressed measurements to the server (e.g.. a TRP, another UE, a base station, and/or the like).

The server may decode the compressed measurements using one or more decompression operations and reconstruction operations associated with one or more neural networks. The one or more decompression and reconstruction operations may be based at least in part on a set of features of the compressed data set to produce reconstructed measurements. The server may perform a wireless communication action based at least in part on the reconstructed measurements.

In some aspects, the client and server may use autoencoder pairs for compressing and reconstructing information. In some cases, autoencoder pairs may be trained using federated learning. Federated learning is a machine learning technique that enables multiple clients to collaboratively learn neural network models, while the server does not collect the data from the clients. In a typical case, federated learning techniques involve a single global neural network model trained from the data stored on multiple clients. For example, in a Federated Averaging (FedAvg) algorithm, the server sends the neural network model to the clients. Each client trains the received neural network model using its own data and sends back an updated neural network model to the server. The server averages the updated neural network models from the clients to obtain a new neural network model.

However, in some cases, some clients may be operating in different environments than other clients (e.g. indoor/outdoor, stationary in a coffee shop/mobile on a highway, and/or the like). In some cases, different clients may be subject to different implementation aspects (e.g. different form factors, different RF impairments, and/or the like). As a result, it may be difficult to find a single neural network model that works well on all the devices in terms of physical layer link performance.

According to aspects of the techniques and apparatuses described herein, partial federated learning and/or fully federated learning techniques may be used to provide and train personalized autoencoder models adapted for respective clients. In this way, aspects may facilitate better physical layer link performance. In some cases, a pair of autoencoders may be employed at a client. The pair of autoencoders may include a first autoencoder and a second autoencoder.

The first autoencoder may be configured to extract features about an environment of the client that may be used to condition the second autoencoder to work well in the perceived environment. The feature vector and an observed wireless communication vector may be provided as input to the second autoencoder, which may be configured to perform a wireless communication task such as, for example, by providing a latent vector. The client may provide the feature vector and the latent vector to the server, which may use a decoder corresponding to the second autoencoder to recover the observed wireless communication vector. Aspects of the techniques described herein may be used for any number of cross-node machine learning challenges including, for example, facilitating channel state feedback, facilitating positioning of a client, learning of modulation and/or waveforms for wireless communication, and/or the like.

The autoencoders may be regular autoencoders and/or variational autoencoders. During training, in some aspects, the autoencoder pair may be collaboratively learned using a federated learning process. During inference, the feature vector from the encoder of the first autoencoder may be used by the encoder of the second autoencoder in computing the latent vector. The feature vector may be viewed as indicating the learned labels of the perceived environment. The client may provide the latent vector and the feature vector to the server, which may use the feature vector in decoding the received latent vector using the decoder of the second autoencoder. The feature vector configures the decoder of the second autoencoder to function as an "expert" for the environment perceived by the UE. In some aspects, the format of the features is collaboratively learned, using federated learning, from data available at each of the clients without exchanging the data.

In some aspects, a pair of autoencoders may be employed at the client. In some aspects, one or more autoencoders may be employed at a server. An autoencoder employed at a client may be referred to herein as an "autoencoder" (when it is clear from context that the autoencoder is employed at a client as opposed to a server) or a "client autoencoder." An autoencoder employed at a server may be referred to as an "autoencoder" (when it is clear from context that the autoencoder is employed at a server as opposed to a client) or a "server autoencoder." In some aspects, a server autoencoder may be a second client autoencoder, may be based on a second client autoencoder, may be similar to a second client autoencoder, and/or the like.

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technology (RAT), aspects of the present disclosure can be applied to other RATs, such as a 3G RAT, a 4G RAT, and/or a RAT subsequent to 5G (e.g., 6G).

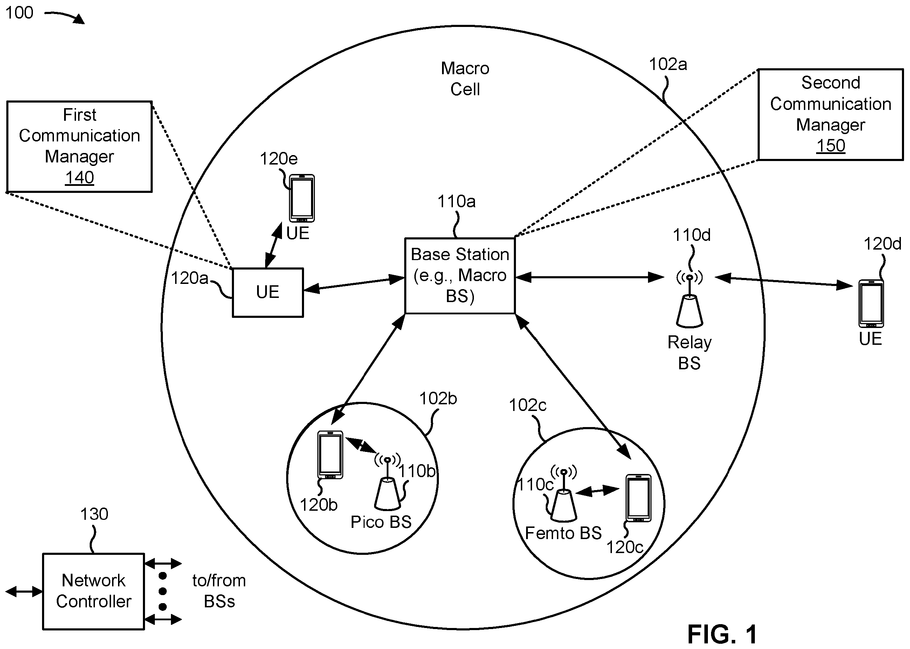

Fig. 1 is a diagram illustrating an example of a wireless network 100, in accordance with the present disclosure. The wireless network 100 may be or may include elements of a 5G (NR) network and/or an LTE network, among other examples. The wireless network 100 may include a number of base stations 110 (shown as BS 110a, BS 110b, BS 110c, and BS 110d) and other network entities. A base station (BS) is an entity that communicates with user equipment (UEs) and may also be referred to as an NR BS, a Node B, a gNB, a 5G node B (NB), an access point, a transmit receive point (TRP), or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some examples, a cell may not necessarily be stationary, and the geographic area of the cell may move according to the location of a mobile BS. In some examples, the BSs may be interconnected to one another and/or to one or more other BSs or network nodes (not shown) in the wireless network 100 through various types of backhaul interfaces, such as a direct physical connection or a virtual network, using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay BS 110d may communicate with macro BS 110a and a UE 120d in order to facilitate communication between BS 110a and UE 120d. A relay BS may also be referred to as a relay station, a relay base station, a relay, or the like.

In some aspects, the wireless network 100 may include one or more non-terrestrial network (NTN) deployments in which a non-terrestrial wireless communication device may include a UE (referred to herein, interchangeably, as a "non-terrestrial UE"), a BS (referred to herein, interchangeably, as a "non-terrestrial BS" and "non-terrestrial base station"), a relay station (referred to herein, interchangeably, as a "non-terrestrial relay station"), and/or the like. As used herein, "NTN" may refer to a network for which access is facilitated by a non-terrestrial UE, non-terrestrial BS, a non-terrestrial relay station, and/or the like.

The wireless network 100 may include any number of non-terrestrial wireless communication devices. A non-terrestrial wireless communication device may include a satellite, an unmanned aircraft system (UAS) platform, and/or the like. A satellite may include a low-earth orbit (LEO) satellite, a medium-earth orbit (MEO) satellite, a geostationary earth orbit (GEO) satellite, a high elliptical orbit (HEO) satellite, and/or the like. A UAS platform may include a high-altitude platform station (HAPS), and may include a balloon, a dirigible, an airplane, and/or the like. A non-terrestrial wireless communication device may be part of an NTN that is separate from the wireless network 100. Alternatively, an NTN may be part of the wireless network 100. Satellites may communicate directly and/or indirectly with other entities in wireless network 100 using satellite communication. The other entities may include UEs (e.g., terrestrial UEs and/or non-terrestrial UEs), other satellites in the one or more NTN deployments, other types of BSs (e.g., stationary and/or ground-based BSs), relay stations, one or more components and/or devices included in a core network of wireless network 100, and/or the like.

Wireless network 100 may be a heterogeneous network that includes BSs of different types, such as macro BSs, pico BSs, femto BSs, relay BSs, or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, and/or location tags, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as may be implemented as NB-IoT (narrowband internet of things) devices. Some UEs may be considered a Customer Premises Equipment (CPE). UE 120 may be included inside a housing that houses components of UE 120, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks may be deployed in a given geographic area. Each wireless network may support a particular RAT and may operate on one or more frequencies. A RAT may also be referred to as a radio technology, an air interface, or the like. A frequency may also be referred to as a carrier, a frequency channel, or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol or a vehicle-to-infrastructure (V2I) protocol), and/or a mesh network. In some aspects, the UE 120 may perform scheduling operations, resource selection operations, and/or other operations described elsewhere herein as being performed by the base station 110.

Devices of wireless network 100 may communicate using the electromagnetic spectrum, which may be subdivided based on frequency or wavelength into various classes, bands, channels, or the like. For example, devices of wireless network 100 may communicate using an operating band having a first frequency range (FR1), which may span from 410 MHz to 7.125 GHz, and/or may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" or the like, if used herein, may broadly represent frequencies less than 6 GHz, frequencies within FR1, and/or mid-band frequencies (e.g., greater than 7.125 GHz). Similarly, unless specifically stated otherwise, it should be understood that the term "millimeter wave" or the like, if used herein, may broadly represent frequencies within the EHF band, frequencies within FR2, and/or mid-band frequencies (e.g., less than 24.25 GHz). It is contemplated that the frequencies included in FR1 and FR2 may be modified, and techniques described herein are applicable to those modified frequency ranges.

As shown in Fig. 1, the UE 120 may include a first communication manager 140. As described in more detail elsewhere herein, the first communication manager 140 may determine, using a first autoencoder, a feature vector associated with one or more features associated with an environment of the UE; determine a latent vector using a second autoencoder and based at least in part on the feature vector; and transmit the feature vector and the latent vector. Additionally, or alternatively, the first communication manager 140 may perform one or more other operations described herein.

In some aspects, the base station 110 may include a second communication manager 150. As described in more detail elsewhere herein, the second communication manager 150 may receive, from a UE, a feature vector associated with one or more features associated with an environment of the UE; receive, from the UE, a latent vector that is based at least in part on the feature vector; determine an observed wireless communication vector based at least in part on the feature vector and the latent vector; and perform a wireless communication action based at least in part on determining the observed wireless communication vector. Additionally, or alternatively, the second communication manager 150 may perform one or more other operations described herein.

As indicated above, Fig. 1 is provided merely as an example. Other examples may differ from what is described with regard to Fig. 1.

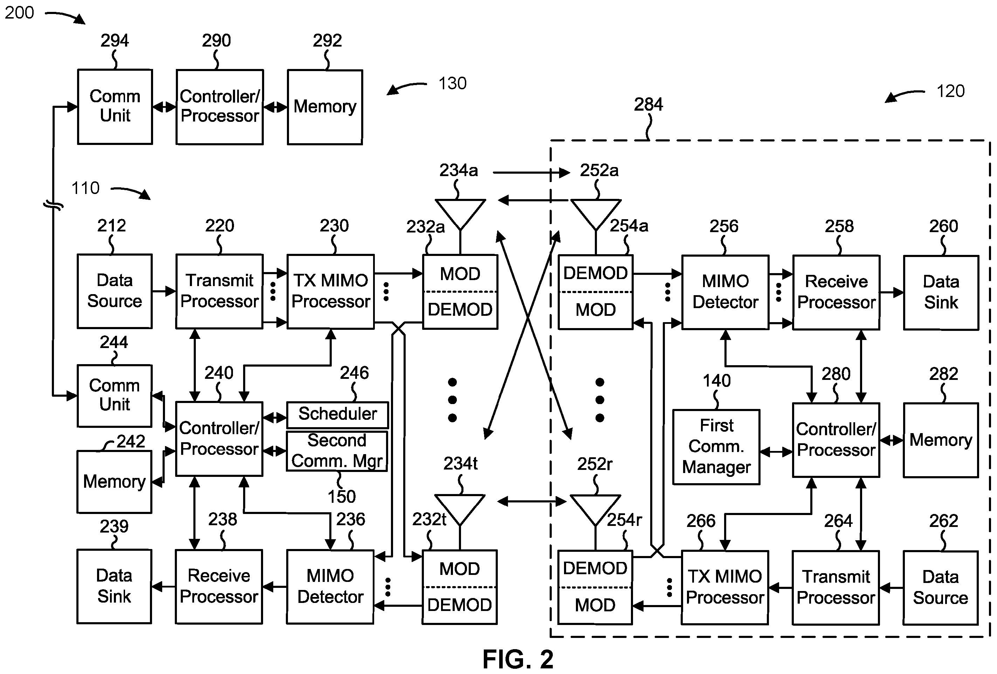

Fig. 2 is a diagram illustrating an example 200 of a base station 110 in communication with a UE 120 in a wireless network 100, in accordance with the present disclosure. Base station 110 may be equipped with $T$ antennas 234a through 234t, and UE 120 may be equipped with $R$ antennas 252a through 252r, where in general $T \geq 1$ and $R \geq 1$.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI)) and control information (e.g., CQI requests, grants, and/or upper layer signaling) and provide overhead symbols and control symbols. Transmit processor 220 may also generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide $T$ output symbol streams to $T$ modulators (MODs) 232a through 232t. Each modulator 232 may process a respective output symbol stream (e.g., for OFDM) to obtain an output sample stream. Each modulator 232 may further process (e.g., convert to analog, amplify, filter, and upconvert) the output sample stream to obtain a downlink signal. $T$ downlink signals from modulators 232a through 232t may be transmitted via $T$ antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM) to obtain received symbols. A MIMO detector 256 may obtain received symbols from all $R$ demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter. In some aspects, one or more components of UE 120 may be included in a housing.

Network controller 130 may include communication unit 294, controller/processor 290, and memory 292. Network controller 130 may include, for example, one or more devices in a core network. Network controller 130 may communicate with base station 110 via communication unit 294.

Antennas (e.g., antennas 234a through 234t and/or antennas 252a through 252r) may include, or may be included within, one or more antenna panels, antenna groups, sets of antenna elements, and/or antenna arrays, among other examples. An antenna panel, an antenna group, a set of antenna elements, and/or an antenna array may include one or more antenna elements. An antenna panel, an antenna group, a set of antenna elements, and/or an antenna array may include a set of coplanar antenna elements and/or a set of non-coplanar antenna elements. An antenna panel, an antenna group, a set of antenna elements, and/or an antenna array may include antenna elements within a single housing and/or antenna elements within multiple housings. An antenna panel, an antenna group, a set of antenna elements, and/or an antenna array may include one or more antenna elements coupled to one or more transmission and/or reception components, such as one or more components of Fig. 2.

On the uplink, at UE 120, a transmit processor 264 may receive and process data from a data source 262 and control information (e.g., for reports comprising RSRP, RSSI, RSRQ, and/or CQI) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM or CP-OFDM), and transmitted to base station 110. In some aspects, a modulator and a demodulator (e.g., MOD/DEMOD 254) of the UE 120 may be included in a modem of the UE 120. In some aspects, the UE 120 includes a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein.

At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Base station 110 may include a scheduler 246 to schedule UEs 120 for downlink and/or uplink communications. In some aspects, a modulator and a demodulator (e.g., MOD/DEMOD 232) of the base station 110 may be included in a modem of the base station 110. In some aspects, the base station 110 includes a transceiver. The transceiver may include any combination of antenna(s) 234, modulators and/or demodulators 232, MIMO detector 236, receive processor 238, transmit processor 220, and/or TX MIMO processor 230. The transceiver may be used by a processor (e.g., controller/processor 240) and memory 242 to perform aspects of any of the methods described herein.

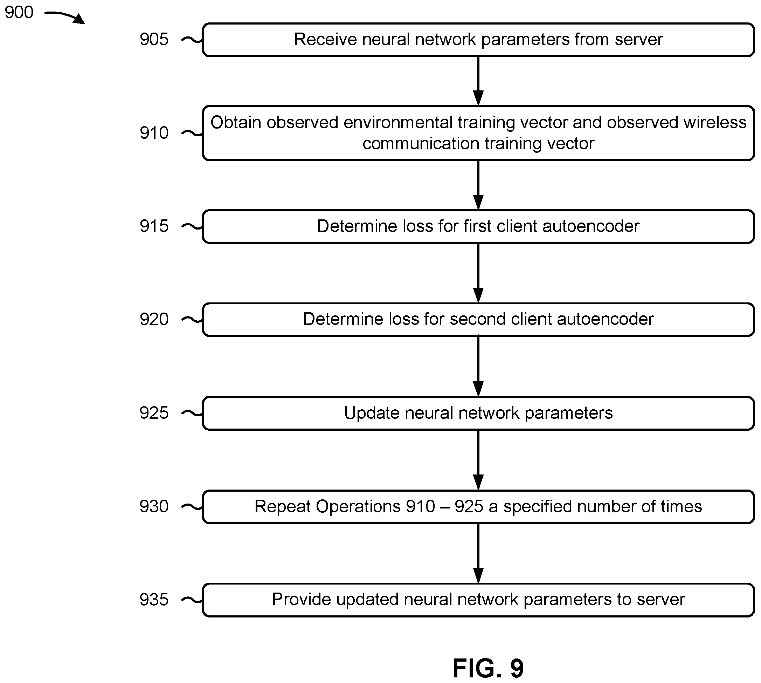

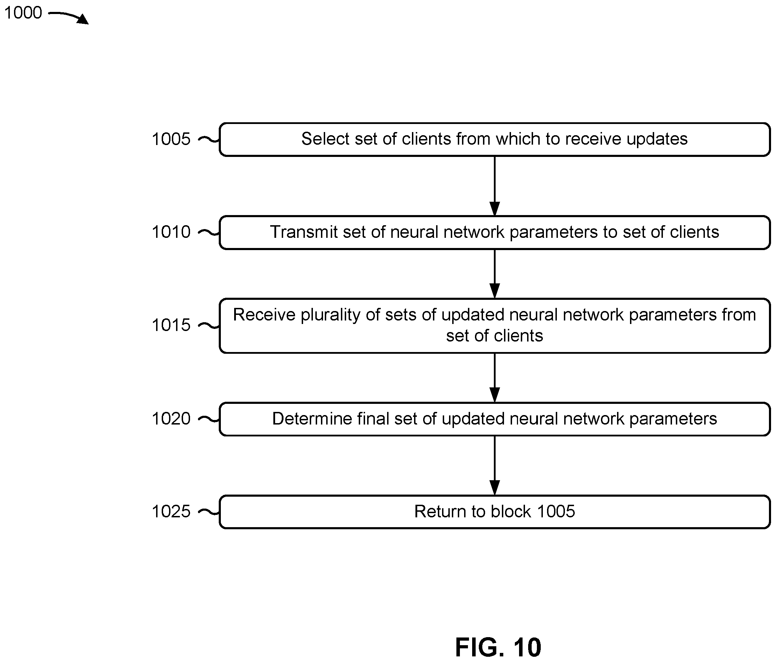

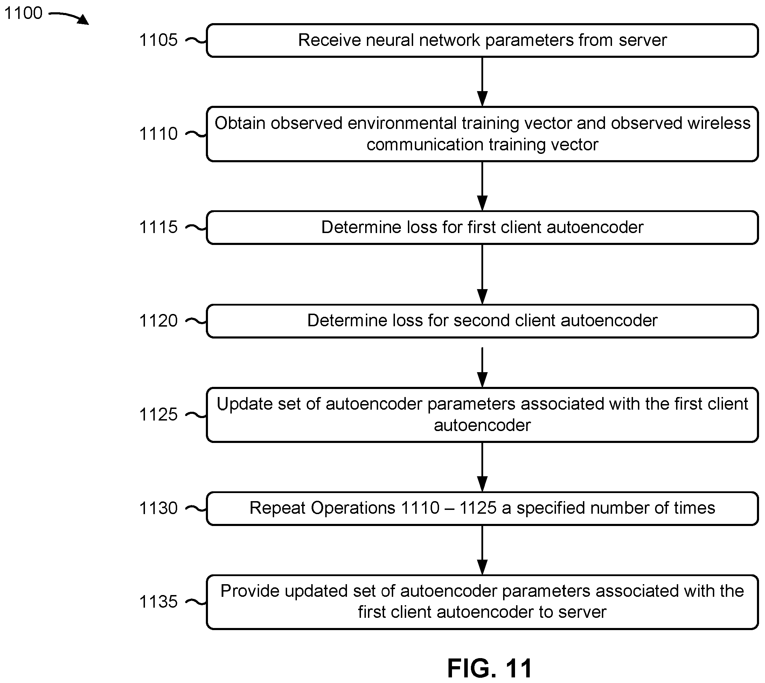

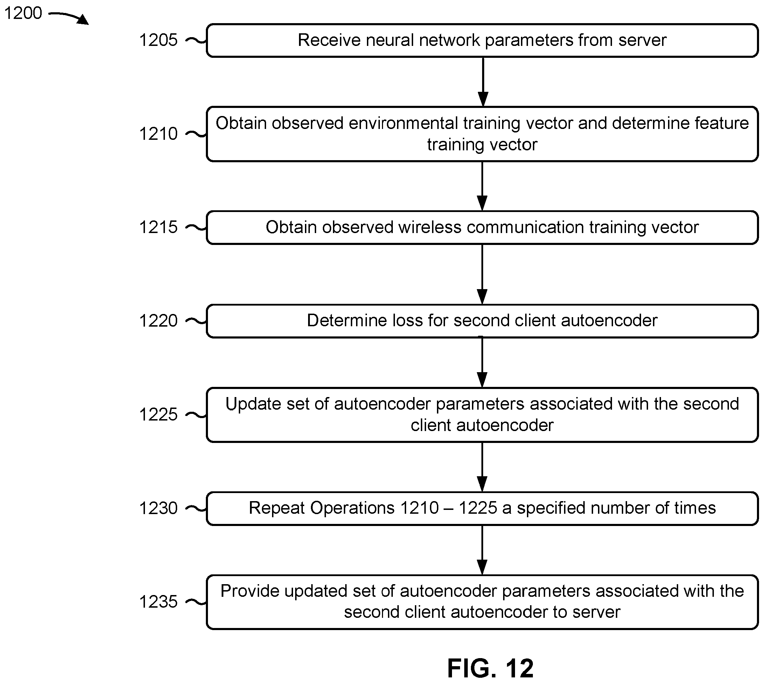

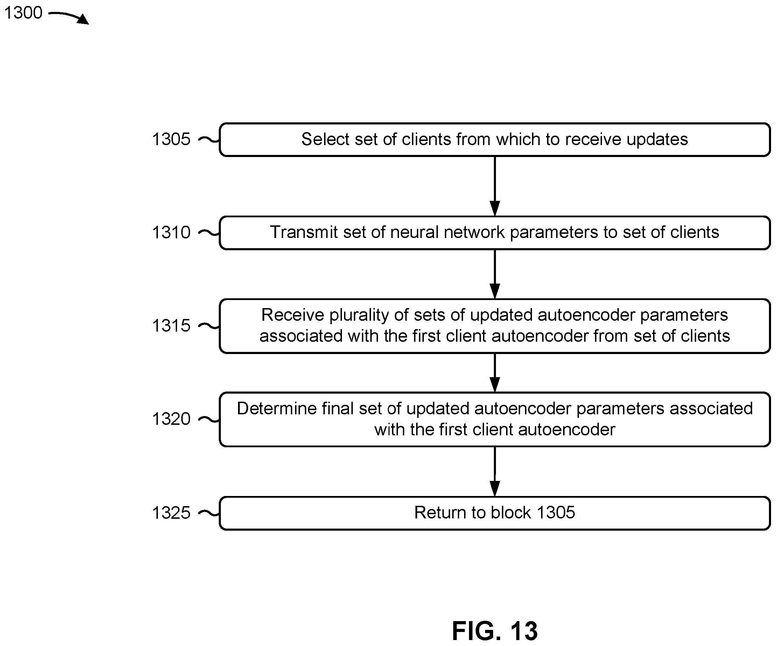

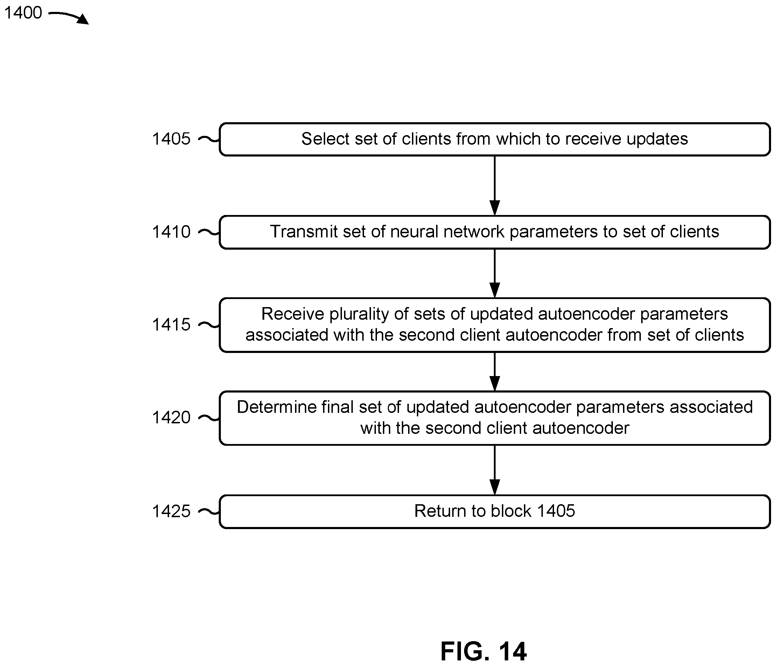

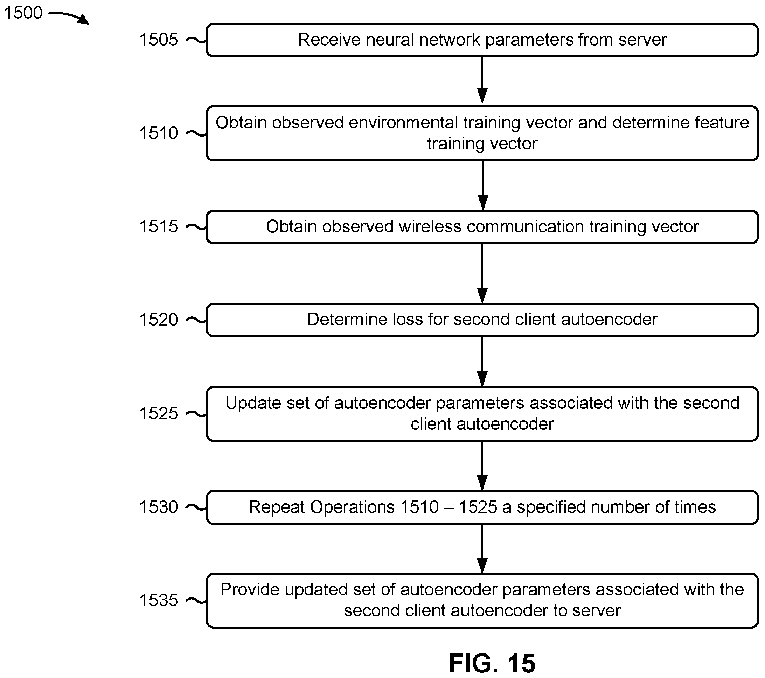

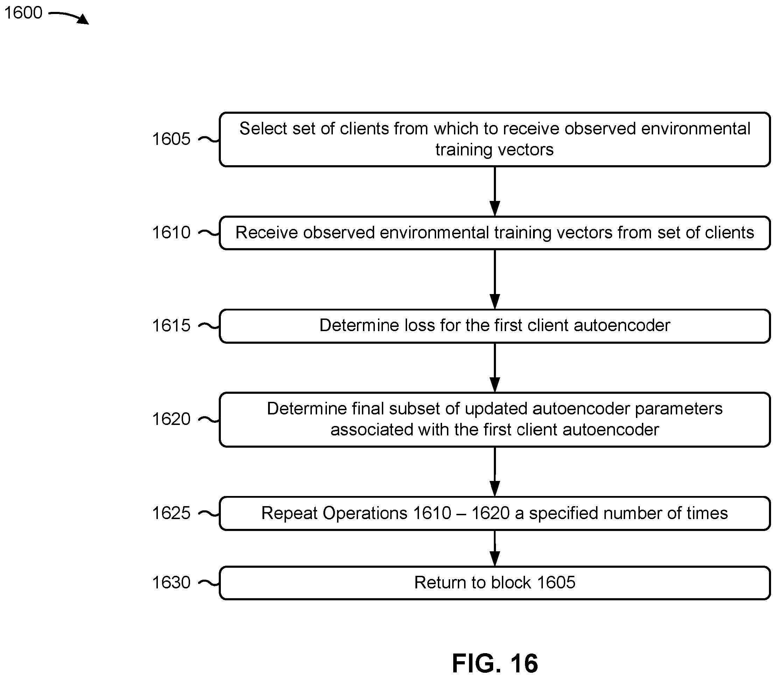

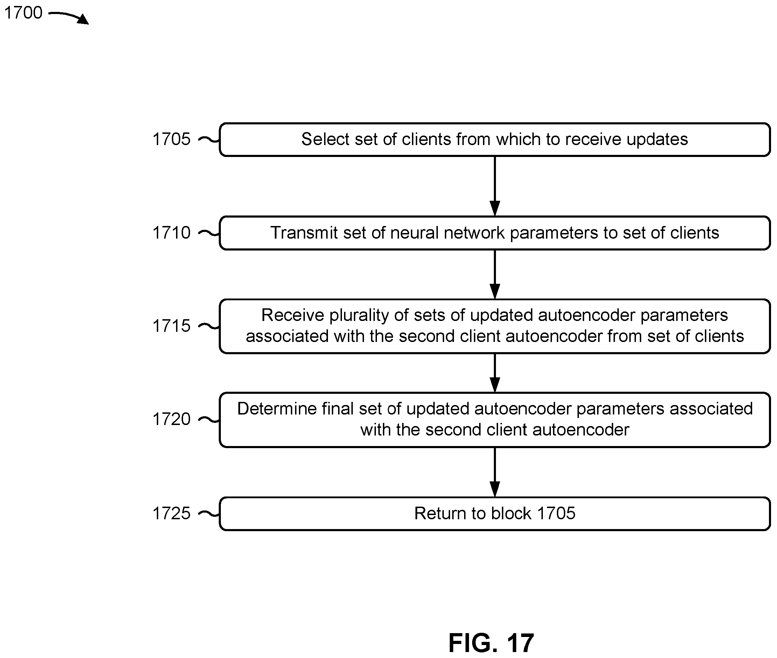

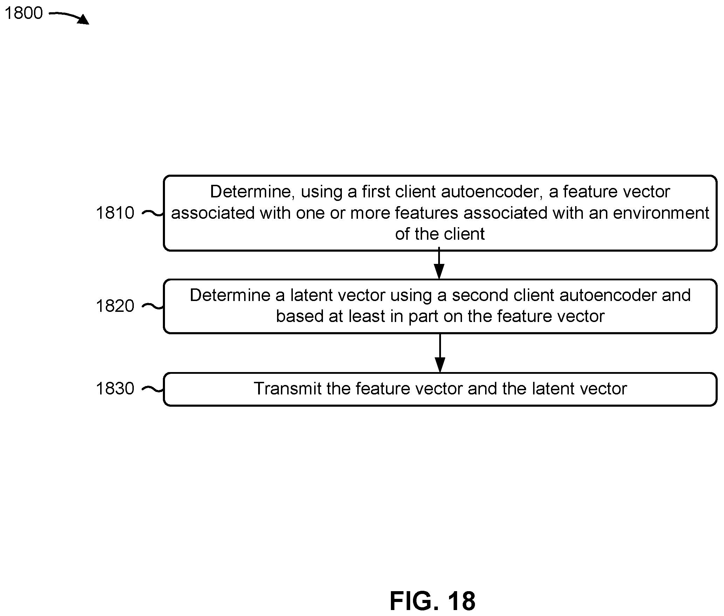

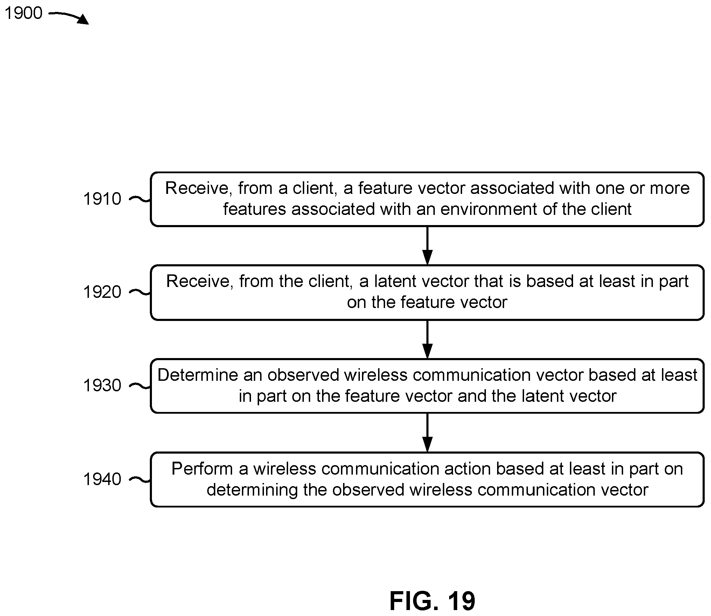

Controller/processor 240 of base station 110, controller/processor 280 of UE 120, and/or any other component(s) of Fig. 2 may perform one or more techniques associated with federated learning of autoencoder pairs for wireless communication, as described in more detail elsewhere herein. For example, controller/processor 240 of base station 110, controller/processor 280 of UE 120, and/or any other component(s) of Fig. 2 may perform or direct operations of, for example, process 900 of Fig. 9, process 1000 of Fig. 10, process 1100 of Fig. 11, process 1200 of Fig. 12, process 1300 of Fig. 13, process 1400 of Fig. 14, process 1500 of Fig. 15, process 1600 of Fig. 16, process 1700 of Fig. 17, process 1800 of Fig. 18, process 1900 of Fig. 19, and/or other processes as described herein. Memories 242 and 282 may store data and program codes for base station 110 and UE 120, respectively. In some aspects, memory 242 and/or memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 900 of Fig. 9, process 1000 of Fig. 10, process 1100 of Fig. 11, process 1200 of Fig. 12, process 1300 of Fig. 13, process 1400 of Fig. 14, process 1500 of Fig. 15, process 1600 of Fig. 16, process 1700 of Fig. 17, process 1800 of Fig. 18, process 1900 of Fig. 19, and/or other processes as described herein. In some aspects, executing instructions may include running the instructions, converting the instructions, compiling the instructions, and/or interpreting the instructions, among other examples.

In some aspects, a client (e.g., the UE 120) may include means for determining, using a first autoencoder, a feature vector associated with one or more features associated with an environment of the UE, means for determining a latent vector using a second autoencoder and based at least in part on the feature vector, means for transmitting the feature vector and the latent vector, and/or the like. Additionally, or alternatively, the UE 120 may include means for performing one or more other operations described herein. In some aspects, such means may include the communication manager 140. Additionally, or alternatively, such means may include one or more other components of the UE 120 described in connection with Fig. 2, such as controller/processor 280, transmit processor 264, TX MIMO processor 266, MOD 254, antenna 252, DEMOD 254, MIMO detector 256, receive processor 258, and/or the like.

In some aspects, a server (e.g., the base station 110) may include means for receiving, from a UE, a feature vector associated with one or more features associated with an environment of the UE, means for receiving, from the UE, a latent vector that is based at least in part on the feature vector, means for determining an observed wireless communication vector based at least in part on the feature vector and the latent vector, means for performing a wireless communication action based at least in part on determining the observed wireless communication vector, and/or the like. Additionally, or alternatively, the base station 110 may include means for performing one or more other operations described herein. In some aspects, such means may include the communication manager 150. In some aspects, such means may include one or more other components of the base station 110 described in connection with Fig. 2, such as antenna 234, DEMOD 232, MIMO detector 236, receive processor 238, controller/processor 240, transmit processor 220, TX MIMO processor 230, MOD 232, antenna 234, and/or the like.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

As indicated above, Fig. 2 is provided merely as an example. Other examples may differ from what is described with regard to Fig. 2.

A client operating in a network may measure reference signals and/or the like to report to a server. For example, the client may measure reference signals during a beam management process for channel state feedback (CSF), may measure received power of reference signals from a serving cell and/or neighbor cells, may measure signal strength of inter-radio access technology (e.g., WiFi) networks, may measure sensor signals for detecting locations of one or more objects within an environment, and/or the like. However, reporting this information to the server may consume communication and/or network resources.

In some aspects described herein, a client (e.g., a UE, a base station, a transmit receive point (TRP), a network device, a low-earth orbit (LEO) satellite, a medium-earth orbit (MEO) satellite, a geostationary earth orbit (GEO) satellite, a high elliptical orbit (HEO) satellite, and/or the like) may use one or more neural networks that may be trained to learn dependence of measured qualities on individual parameters, isolate the measured qualities through various layers of the one or more neural networks (also referred to as "operations"), and compress measurements in a way that limits compression loss. The client may transmit the compressed measurements to a server (e.g., a TRP, another UE, a base station, and/or the like).

The server may decode the compressed measurements using one or more decompression operations and reconstruction operations associated with one or more neural networks. The one or more decompression and reconstruction operations may be based at least in part on a set of features of the compressed data set to produce reconstructed measurements. The server may perform a wireless communication action based at least in part on the reconstructed measurements.

In some aspects, the client and server may use autoencoder pairs for compressing and reconstructing information. In some cases, autoencoder pairs may be trained using federated learning. Federated learning is a machine learning technique that enables multiple clients to collaboratively learn neural network models, while the server does not collect the data from the user devices. In a typical case, federated learning techniques involve a single global neural network model trained from the data stored on multiple clients. For example, in a Federated Averaging (FedAvg) algorithm, the server sends the neural network model to the clients. Each client trains the received neural network model using its own data and sends back the updated neural network model to the server. The server averages the updated neural network models from the clients to obtain the new neural network model.

However, in some cases, some clients may be operating in different environments than other clients (e.g. indoor/outdoor, stationary in a coffee shop/mobile in a highway, and/or the like). In some cases, different clients may be subject to different implementation aspects (e.g. different form factors, different RF impairments, and/or the like). As a result, it may be difficult to find a single neural network model that works well on all the devices in terms of the physical layer link performance.

According to aspects of the techniques and apparatuses described herein, partial federated learning and/or fully federated learning techniques may be used to provide and train personalized autoencoder models, adapted for respective clients. In this way, aspects may facilitate better physical layer link performance. In some aspects, a pair of autoencoders may be employed at the client. The first autoencoder may be configured to extract features about an environment of the client that may be used to condition the second autoencoder to work well in the perceived environment. The feature vector and an observed wireless communication vector may be provided as input to the second autoencoder, which may be configured to perform a wireless communication task such as, for example, by providing a latent vector. The client may provide the feature vector and the latent vector to the server, which may use a decoder corresponding to the second autoencoder to recover the observed wireless communication vector. Aspects of the techniques described herein may be used for any number of cross-node machine learning challenges including, for example, facilitating channel state feedback, facilitating positioning of a client, learning of modulation and/or waveforms for wireless communication, and/or the like.

The autoencoders may be regular autoencoders and/or variational autoencoders. During training, in some aspects, the autoencoder pair may be collaboratively learned using a federated learning process. During inference, the feature vector from the encoder of the first autoencoder may be used by the encoder of the second autoencoder in computing the latent vector. The feature vector may be viewed as indicating the learned labels of the perceived environment. The client may provide the latent vector and the feature vector to the server, which may use the feature vector in decoding the received latent vector, using the decoder of the second autoencoder. The feature vector configures the decoder of the second autoencoder to function as an "expert" for the environment perceived by the UE. In some aspects, the format of the features is collaboratively learned, using federated learning, from data available at each of the clients without exchanging the data.

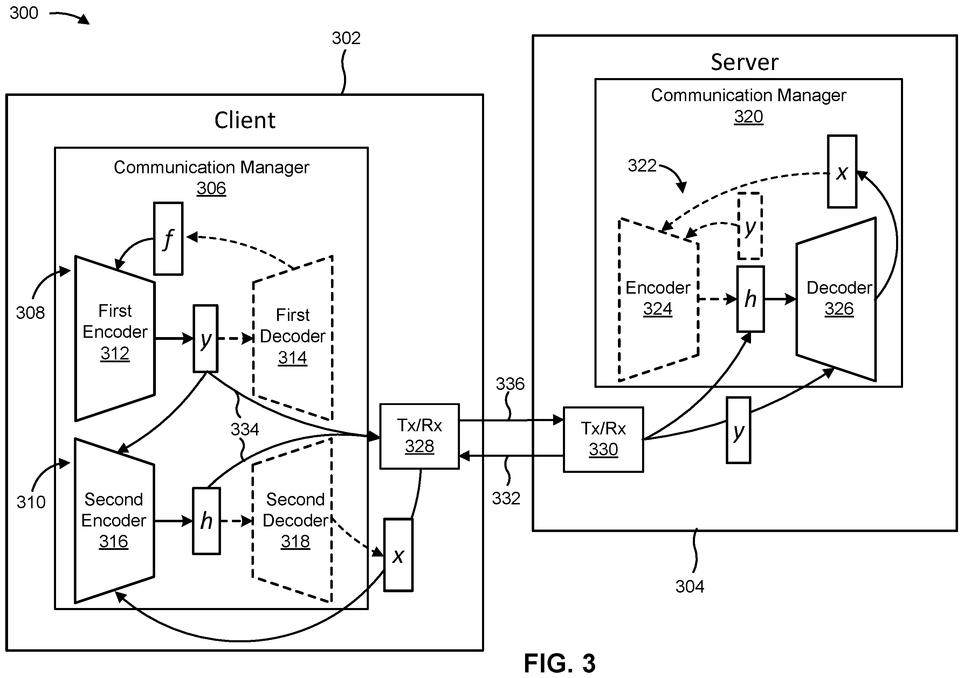

Fig. 3 is a diagram illustrating an example 300 of wireless communication using an autoencoder pair, in accordance with the present disclosure. As shown, a client 302 and a server 304 may communication with one another. In some aspects, the client 302 and the server 304 may communicate with one another via a wireless network (e.g., the wireless network 100 shown in Fig. 1). In some aspects, more than one client 302 and/or more than one server 304 may communicate with one another.

In some aspects, the client 302 may be, be similar to, include, or be included in a wireless communication device (e.g., a UE 120, a base station 110, an IAB node, and/or the like). In some aspects, the server 304 may be, be similar to, include, or be included in a wireless communication device (e.g., a UE 120, a base station 110, an IAB node, and/or the like). For example, in some aspects, the client 302 may be a UE 120 and the server 304 may be a base station, and the client 302 and the server 304 may communicate via an access link. In some aspects, the client 302 and the server 304 may be UEs 120 that communicate via a sidelink.

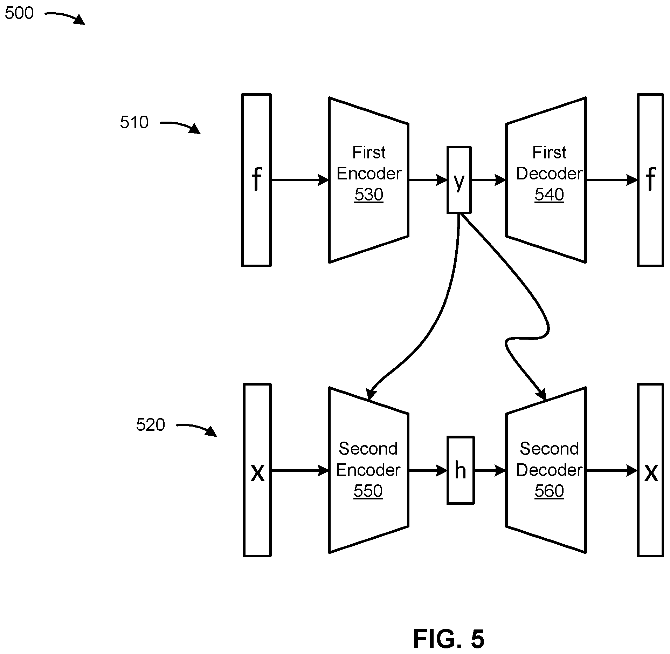

As shown, the client 302 may include a communication manager 306 (e.g., the communication manager 140 shown in Fig. 1) that may be configured to utilize a first client autoencoder 308 and a second client autoencoder 310 to perform one or more wireless communication tasks. In some aspects, the first client autoencoder 308 may be, be similar to, include, or be included in, the first autoencoder 510 shown in Fig. 5 and described below. In some aspects, the second client autoencoder 310 may be, be similar to, include, or be included in, the second autoencoder 520 shown in Fig. 5 and described below.

As shown, the first client autoencoder 308 may include a first encoder 312 configured to receive an observed environmental vector, *f,* as input and to provide a feature vector, *y,* as output. The first client autoencoder 308 also includes a first decoder 314 configured to receive the feature vector, *y,* as input and to provide the observed environmental vector as output.

As shown, the second client autoencoder 310 may include a second encoder 316 configured to receive an observed wireless communication vector, *x,* and the feature vector, *y,* as input and to provide a latent vector, *h,* as output. The second client autoencoder 310 also may include a second decoder 318 configured to receive the latent vector, *h,* and the feature vector, *y,* as input and to provide the observed wireless communication vector, *x,* as output. In operation, as indicated by the features denoted in dashed lines, the client 302 may utilize the first and second encoders 312 and 316 of the first and second client autoencoders 308 and 310, respectively, to determine a feature vector, *y,* and a latent vector, *h.*

As shown in Fig. 3, the server 304 may include a communication manager 320 (e.g., the communication manager 150) that may be configured to utilize a server autoencoder 322 to perform one or more wireless communication tasks. For example, in some aspects, the server autoencoder 322 may correspond to the second client autoencoder 310. In some aspects, the server autoencoder 322 may be, be similar to, include, or be included in, the second autoencoder 520 shown in Fig. 5 and described below.

In some aspects, the server autoencoder 322 may include an encoder 324 configured to receive the observed wireless communication vector, *x,* and the feature vector, *y,* as input and to provide a latent vector, *h,* as output. The server autoencoder 322 also may include a decoder 326 configured to receive the latent vector, *h,* and the feature vector, *y,* as input and to provide the observed wireless communication vector, *x,* as output. In operation, as indicated by the features denoted in dashed lines, the server 304 may utilize the decoder 326 of the server autoencoder 322 to determine an observed wireless communication vector, $x$.

As shown in Fig. 3, the client 302 may include a transceiver (shown as "Tx/Rx") 328 that may facilitate wireless communications with a transceiver 330 of the server 304. As shown by reference number 332, for example, the server 304 may transmit, using the transceiver 330, a wireless communication to the client 302. In some aspects, the wireless communication may include a reference signal such as a channel state information reference signal (CSI-RS). The transceiver 328 of the client 302 may receive the wireless communication. The communication manager 306 may determine an observed wireless communication vector, $x$, based at least in part on the wireless communication. For example, in aspects in which the wireless communication is a CSI-RS, the observed wireless communication vector, $x$, may include channel state information (CSI).

As shown, the communication manager 306 may obtain an observed environmental vector, $f$, and provide the observed environmental vector, $f$, to the first encoder 312 of the first client autoencoder 308. The communication manager 306 may obtain the observed environmental vector from memory, from one or more sensors, and/or the like. As shown, the first encoder 312 may determine, based at least in part on the observed environmental vector, $f$, a feature vector, $y$. As shown, the communication manager 306 may provide, as input, the feature vector, $y$, and the observed wireless communication vector, $x$, to the second encoder 316 of the second client autoencoder 310. The second encoder 316 of the second client autoencoder 310 may determine, based at least in part on the feature vector, $y$, and the observed wireless communication vector, $x$, a latent vector, $h$.

As shown by reference number 334, the communication manager 306 may provide the feature vector, $y$, and the latent vector, $h$, to the transceiver 328 for transmission. As shown by reference number 336, the transceiver 328 may transmit, and the transceiver 330 of the server 304 may receive, the feature vector, $y$, and the latent vector, $h$. As shown, the communication manager 320 of the server 304 may provide the feature vector, $y$, and the latent vector, $h$, as input to the decoder 326 of the server autoencoder 322. The decoder 326 may determine (e.g., reconstruct) the observed wireless communication vector, $x$, based at least in part on the feature vector, $y$, and the latent vector, $h$. In some aspects, the server 304 may perform a wireless communication action based at least in part on the observed wireless communication vector, $x$. For example, in aspects in which the observed wireless communication vector, $x$, comprises CSI, the communication manager 320 of the server 304 may use the CSI for communication grouping, beamforming, and/or the like.

As indicated above, Fig. 3 is provided merely as an example. Other examples may differ from what is described with regard to Fig. 3.

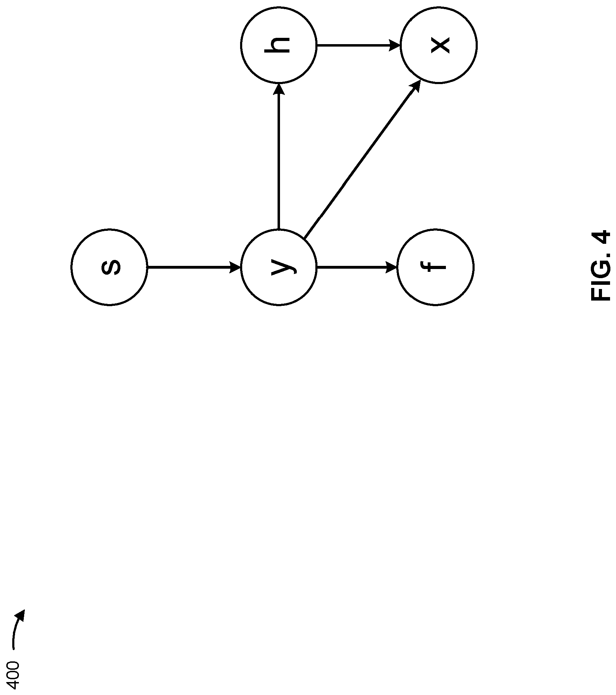

Fig. 4 is a diagram illustrating an example 400 of a directed graphical model corresponding to an autoencoder pair, in accordance with the present disclosure. In some aspects, for example, the directed graphical model may correspond to the client autoencoders 308 and 310 shown in Fig. 3, the server autoencoder 322 shown in Fig. 3, and/or the like.

In some aspects, a data distribution at a client, s, may be represented by the directed graphical model shown in Fig. 4. The model provides an example of a representation of a relationship between the client, s; an observed wireless communication vector, $x$; a latent vector, $h$; an observed environmental vector, $f$; and a feature vector, $y$. In some aspects, the observed environmental vector, $f$, may include one or more variables that may be observed to facilitate learning the environment of the client, s. In some aspects, the feature vector, $y$, may include learned "labels" or features that may summarize, aggregate, and/or otherwise characterize the information in the observed environmental vector, $f$.

In some aspects, the latent vector, $h$, may be associated with a wireless communication task. In some aspects, the wireless communication task may include determining channel state feedback (CSF), determining positioning information associated with the client, determining a modulation associated with a wireless communication, determining a waveform associated with a wireless communication, and/or the like.

For example, in some aspects, paired autoencoders may be used for compressing CSF for feeding back CSI to a server. In some aspects, the observed wireless communication vector, $x$, may comprise a propagation channel that the client (e.g., a UE 120) estimates based at least in part on a received CSI-RS. The latent vector, $h$, may comprise compressed CSF to be fed back to a server (e.g., a base station 110).

In some aspects, the observed environmental vector, $f$, may include any number of different types of information that a client (e.g., client 302 shown in Fig. 3) may obtain about an environment of the client. Information about the environment of the client may include information about the client (e.g., device information, configuration information, capability information, and/or the like), information about a state associated with the client (e.g., an operation state, a power state, an activation state, and/or the like), information about the location of the client (e.g., positioning information, orientation information, geographical information, motion information, and/or the like), information about an environment surrounding the client (e.g., weather information, information about obstacles to wireless signals surrounding the client, information about materials in the vicinity of the client, and/or the like), and/or the like. The observed environmental vector, $f$, may be formed by concatenating one or more information indications such as those listed above.

In some aspects, for example, the observed environmental vector, $f$, may include a client identifier (ID), a client antenna configuration, a large scale channel characteristic, a CSI-RS configuration, an image obtained by an imaging device, a portion of an estimated propagation channel, and/or the like. In some aspects, for example, the large scale channel characteristic may indicate a delay spread associated with a channel, a power delay profile associated with a channel, a Doppler measurement associated with a channel, a Doppler spectrum associated with a channel, a signal to noise ratio (SNR) associated with a channel, a signal to noise plus interference ratio (SiNR) associated with a channel, a reference signal received power (RSRP), a received signal strength indicator (RSSI), and/or the like.

In some aspects, the graphical model shown in Fig. 4 may be used to derive a probabilistic expression related to using a corresponding pair of autoencoders in accordance with aspects discussed herein. For example, in some aspects, the graphical model may indicate the following conditional probability:

$$p(x, f, h, y|s) = p(x|h, y) \cdot p(h|y) \cdot p(f|y) \cdot p(y|s),$$

where $p$ is a probability, $x$ is an observed wireless communication vector, $f$ is an observed environmental vector, $h$ is a latent vector, $y$ is a feature vector based at least in part on $f$, and s is the client. In some aspects, the conditional probability indicated by the directed graphical model may be used to configure training of autoencoders.

As indicated above, Fig. 4 is provided merely as an example. Other examples may differ from what is described with regard to Fig. 4.

Fig. 5 is a diagram illustrating an example 500 of an autoencoder pair, in accordance with the present disclosure. Aspects of the example 500 may be implemented by a client (e.g., the client 302 shown in Fig. 3), a server (e.g.. the server 304 shown in Fig. 3), and/or the like. The autoencoder pair shown in Fig. 5 may be used to implement aspects associated with the directed graphical model shown in Fig. 4. An autoencoder associated with a client may be referred to as a client autoencoder. An autoencoder associated with a server may be referred to as a server autoencoder.

As shown, the autoencoder pair includes a first autoencoder 510 and a second autoencoder 520. The first autoencoder 510 and/or the second autoencoder 520 may be a regular autoencoder or a variational autoencoder. The first autoencoder 510 may include a first encoder 530 configured to receive an observed environmental vector, $f$, as input and to provide a feature vector, y, as output. The first autoencoder 510 also may include a first decoder 540 configured to receive the feature vector, $y$, as input and to provide (e.g., recover) the observed environmental vector, f, as output.

As shown, the second autoencoder 520 may include a second encoder 550 configured to receive an observed wireless communication vector, $x$, and the feature vector, $y$, as input and to provide a latent vector, $h$, as output. The second autoencoder 520 also may include a second decoder 560 configured to receive the latent vector, $h$, and the feature vector, $y$, as input and to provide (e.g., recover) the observed wireless communication vector, $x$, as output.

According to various aspects, autoencoder pairs such as the autoencoder 510 and the autoencoder 520 may be trained before being used for inference. In some aspects, for example, the autoencoder pairs may be trained based on using a reparameterization. For example, during training, the first encoder 530 may be used to sample or compute the feature vector $y$ using the reparameterization trick, which may be used to train both the first autoencoder 510 and the second autoencoder 520. In some aspects, training the first autoencoder 510 and/or the second autoencoder 520 may include determining a set of neural network parameters, $\theta$ and $\phi$, that maximize a variational lower bound function (which may be referred to, interchangeably, as an evidence lower bound (ELBO) function) corresponding to the first autoencoder 510 and the second autoencoder 520.

In some aspects, to find the ELBO on the evidence function, log $p_\theta$ (x, f|s), a variational distribution $q_\phi(h, y|x, f) = q_{\phi_2}(h|x, y)q_{\phi_1}(y|f)$ may be introduced, and the ELBO may be written as:

$$\mathcal{L}_{\theta, \phi} = \sum_{h, y} q_\phi(h, y|x, f) \log \left( \frac{p_{\theta_2}(x|h, y) p_{\theta_2}(h|y) p_{\theta_1}(f|y) p(y|s)}{q_\phi(h, y|x, f)} \right),$$

where $\phi_1$ represents neural network parameters associated with the first encoder 530, $\phi_2$ represents neural network parameters associated with the second encoder 550, $\theta_1$ represents neural network parameters associated with the first decoder 540, $\theta_2$ represents neural network parameters associated with the second decoder 560, $\phi = [\phi_1, \phi_2]$ represents neural network parameters associated with the first encoder 530 and the second encoder 550, and $\theta = [\theta_1, \theta_2]$ represents neural network parameters associated with the first decoder 540 and the second decoder 560. The ELBO $\mathcal{L}_{\theta, \phi}$ may be used in the training to optimize the neural network parameters $\theta$ and $\phi$. In some aspects, $(\phi_1, \theta_1)$ may be referred to as a set of autoencoder parameters associated with the first autoencoder 510, and $(\phi_2, \theta_2)$ may be referred to as a set of autoencoder parameters associated with the second autoencoder 520. In some aspects, training the first and second autoencoders 510 and 520 may include finding the neural network parameters $\theta$ and $\phi$ that maximize the ELBO, $\mathcal{L}_{\theta, \phi}$. In some aspects, a negative variational lower bound function may correspond to a sum of a first loss function associated with the first autoencoder 510 and a second loss function associated with the second autoencoder 520. For example, the first loss function may include a first reconstruction loss and a first regularization term for the first autoencoder 510, and the second loss function may include a second reconstruction loss and a second regularization term for the second autoencoder 520.

For example, the ELBO may be decomposed into two parts:

$$\mathcal{L}_{\theta,\phi} = \mathcal{L}_a + \mathcal{L}_b,$$

where

$$\mathcal{L}_a = E_{y \sim q_{\phi_1}(y|f)}\left[\log\left(p_{\theta_1}(f|y)\right)\right] - KL(q_{\phi_1}(y|f) \| p(y|s)),$$

and

$$\mathcal{L}_b = E_{y \sim q_{\phi_1}(y|f)}\left[E_{h \sim q_{\phi_2}(h|x,y)}\left\{p_{\theta_2}(x|h,y)\right\} - KL(q_{\phi_2}(h|x,y) \| p_{\theta_2}(h|y))\right],$$

where $q_{\phi_1}(y|f)$ is parameterized by the first encoder 530, $p_{\theta_1}(f|y)$ is parameterized by the first decoder 540, $q_{\phi_2}(h|x, y)$ is parameterized by the second encoder 550, $p_{\theta_2}(x|h, y)$ is parameterized by the second decoder 560, $p_{\theta_2}(h|y)$ is parameterized by a prior network to train the second autoencoder 520, p(y|s) can be assumed to be Gaussian distributed (e.g., p(y|s)= $\mathcal{N}(y; 0, I)$), $E_{y \sim q_{\phi_1}(y|f)}\left[\log\left(p_{\theta_1}(f|y)\right)\right]$ is the reconstruction loss for the first autoencoder 510, $E_{y \sim q_{\phi_1}(y|f)}\left[E_{h \sim q_{\phi_2}(h|x,y)}\left\{p_{\theta_2}(x|h,y)\right\}\right]$ is the reconstruction loss for the second autoencoder 520, $KL(q_{\phi_1}(y|f) \| p(y|s))$ is the regularization term for the first autoencoder 510, and $E_{y \sim q_{\phi_1}(y|f)}\left[KL(q_{\phi_2}(h|x,y) \| p_{\theta_2}(h|y))\right]$ is the regularization term for the second autoencoder 520.

Here, the negative ELBO given by $\mathcal{F}_{\theta,\phi} = -\mathcal{L}_{\theta,\phi}$ (also known as variational free energy) may be used as a loss function in the training, and a stochastic gradient descent (SGD) algorithm may be used to optimize the neural network parameters $\theta$ and $\phi$. Correspondingly, the loss can be decomposed into $\mathcal{F}_{\theta,\phi} = \mathcal{F}_a + \mathcal{F}_b$, where $\mathcal{F}_a = -\mathcal{L}_a$ is the loss for the first autoencoder 510, and $\mathcal{F}_b = -\mathcal{L}_b$ is the loss for the second autoencoder 520. The negative ELBO $\mathcal{F}_{\theta,\phi}$ may be referred to as "the total loss." In some aspects, the regularization terms $KL(q_{\phi_1}(y|f) \| p(y|s))$ and $KL(q_{\phi_2}(h|x, y) \| p_{\theta_2}(h|y))$ may be optional. If the regularization terms are not included in a loss function, the autoencoders 510 and 520, which otherwise may be variational autoencoders, are reduced to regular autoencoders.

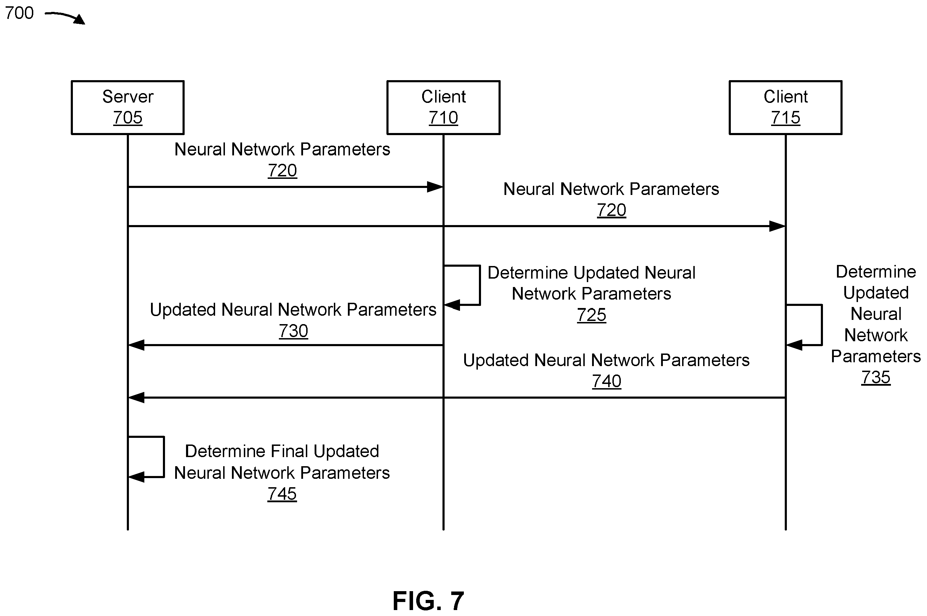

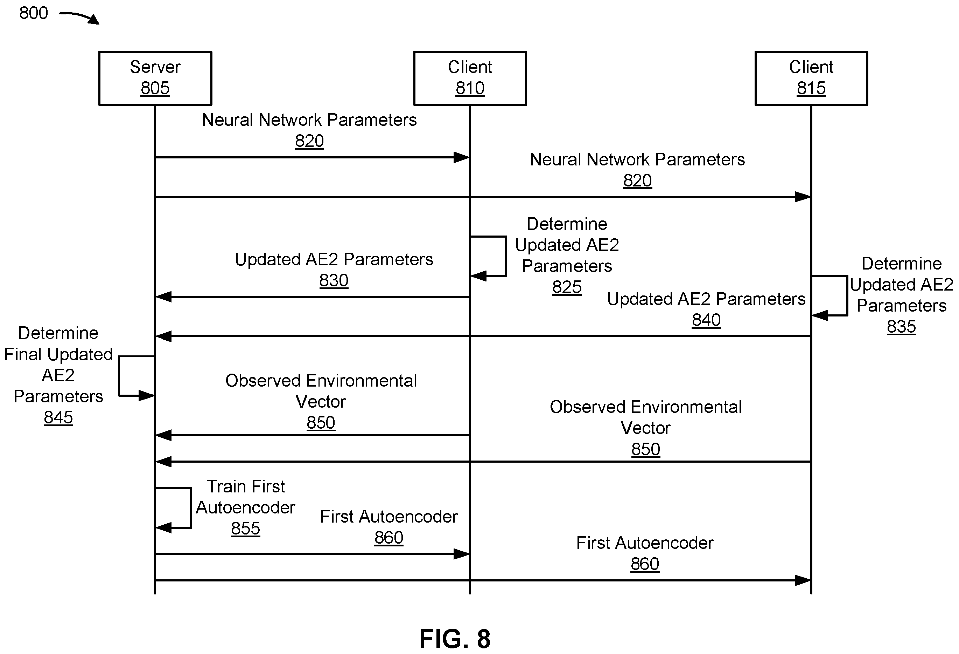

In some aspects, the feature vector, y, from the first encoder 530 may condition the second autoencoder 520 to perform well in the observed environment. This can be viewed as an expert selection. The format of the feature vector, y, may be learned by training both the first and second autoencoders 510 and 520 together. In this way, human input may not be needed for development of the feature vector, y. In some aspects, the first autoencoder 510 and/or the second autoencoder 520 may be trained using an unsupervised learning procedure. The first autoencoder 510 and/or the second autoencoder 520 may be trained using a fully federated learning procedure (e.g., as shown in Figs. 7 and 9-14), a partially federated learning procedure (e.g., as shown in Figs. 8 and 15-17), and/or the like.

As indicated above, Fig. 5 is provided merely as an example. Other examples may differ from what is described with regard to Fig. 5.

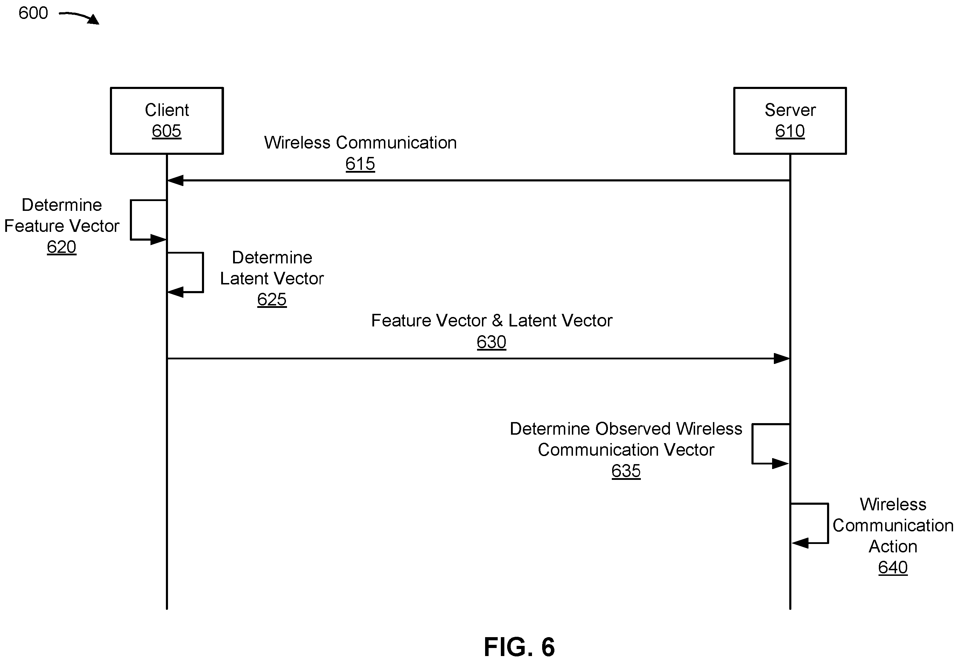

Fig. 6 is a diagram illustrating an example 600 of wireless communication using an autoencoder pair, in accordance with the present disclosure. As shown, a client 605 and a server 610 may communicate with one another. In some aspects, the client 605 may be, be similar to, include, or be included in the client 302 shown in Fig. 3. In some aspects, the server 610 may be, be similar to, include, or be included in the server 304 shown in Fig. 3.

As shown by reference number 615, the server 610 may transmit, and the client 605 may receive, a wireless communication. In some aspects, the wireless communication may include a reference signal (e.g., a CSI-RS, and/or the like), a data communication, a control communication, and/or the like. In some aspects, the wireless communication may be carried using a physical downlink control channel (PDCCH), a physical downlink shared channel (PDSCH), a physical sidelink control channel (PSCCH), a physical sidelink shared channel (PSSCH), and/or the like.

As shown by reference number 620, the client 605 may determine a feature vector associated with one or more features associated with an environment of the client 605. For example, in some aspects, the client 605 may determine the feature vector using a first autoencoder (e.g., the first autoencoder 510 shown in Fig. 5, the first client autoencoder 308 shown in Fig. 3, and/or the like). As shown by reference number 625, the client 605 may determine a latent vector. For example, in some aspects, the client may determine the latent vector using a second autoencoder (e.g., the second autoencoder 520 shown in Fig. 5, the second client autoencoder 310 shown in Fig. 3, and/or the like).

As shown by reference number 630, the client 605 may transmit, and the server 610 may receive, the feature vector and the latent vector. In some aspects, the feature vector and the latent vector may be carried in a physical uplink control channel (PUCCH), a physical uplink shared channel (PUSCH), and/or the like. As shown by reference number 635, the server 610 may determine an observed wireless communication vector. In some aspects, the server 610 may determine the observed wireless communication vector based at least in part on the feature vector and the latent vector. For example, in some aspects, the server 610 may use a decoder of an autoencoder (e.g., the second autoencoder 520 shown in Fig. 5, the server autoencoder 322 shown in Fig. 3, and/or the like) to determine the observed wireless communication vector. As shown by reference number 640, the server may perform a wireless communication action based at least in part on determining the observed wireless communication vector.

As indicated above, Fig. 6 is provided merely as an example. Other examples may differ from what is described with regard to Fig. 6.

Fig. 7 is a diagram illustrating an example 700 of fully federated learning for an autoencoder pair, in accordance with the present disclosure. As shown, a server 705, a first client 710, and a second client 715 may communicate with one another. In some aspects, the server 705 may be, be similar to, include, or be included in the server 610 shown in Fig. 6, the server 304 shown in Fig. 3, and/or the like. In some aspects, the client 710 and/or the client 715 may be, be similar to, include, or be included in the client 605 shown in Fig. 6, the client 302 shown in Fig. 3, and/or the like. In some aspects, any number of additional clients may communicate with the server 705.

In some aspects, fully federated learning may include jointly training a first autoencoder (e.g., the first autoencoder 510 shown in Fig. 5) and a second autoencoder (e.g., the second autoencoder 520 shown in Fig. 5). In fully federated learning, both autoencoders are trained by clients. In some aspects, fully federated learning may include alternating between training a first autoencoder and training a second autoencoder. In some aspects, a mapping to a feature vector, $y$, may change slowly since the client features chosen for the observed vector, $f$, may be relatively static or change slowly. As a result, in some aspects, alternating between training the first autoencoder and training the second autoencoder may include performing a first plurality of training iterations associated with the first autoencoder according to a first training frequency; and performing a second plurality of training iterations associated with the second autoencoder according to a second training frequency that is higher than the first training frequency.

As shown by reference numbers 720, the server 705 may transmit, to a set of clients (e.g., the client 710 and the client 715), a set of neural network parameters (e. g., the parameters $\theta$ and $\phi$, described above, in connection with Fig. 5). The neural network parameters may correspond to a first client autoencoder and a second client autoencoder. As shown by reference number 725, the first client 710 may determine a set of updated neural network parameters. As shown by reference number 730, the first client 710 may transmit, and the server 705 may receive, the set of updated neural network parameters.

As shown by reference number 735, the second client 715 also may determine a set of updated neural network parameters. As shown by reference number 740, the second client 715 may transmit, and the server 705 may receive, the set of updated neural network parameters. As shown by reference number 745, the server 705 may determine a "final" set of updated neural network parameters. The server 705 may determine the final set of updated neural network parameters by averaging the updated neural network parameters received from the clients 710 and 715. The server 705 may use the final set of updated neural network parameters to update a server autoencoder, a first client autoencoder, and a second client autoencoder.

As indicated above, Fig. 7 is provided merely as an example. Other examples may differ from what is described with regard to Fig. 7.

Fig. 8 is a diagram illustrating an example 800 of partially federated learning for an autoencoder pair, in accordance with the present disclosure. As shown, a server 805, a client 810, and a client 815 may communicate with one another. In some aspects, the server 805 may be, be similar to, include, or be included in the server 610 shown in Fig. 6, the server 304 shown in Fig. 3, and/or the like. In some aspects, the client 810 and/or the client 815 may be, be similar to, include, or be included in the client 605 shown in Fig. 6, the client 302 shown in Fig. 3, and/or the like. In some aspects, any number of additional clients may communicate with the server 805.

In some aspects, a partially federated learning procedure may include centralized learning for training a first autoencoder of an autoencoder pair, while the second autoencoder is locally trained. For example, in some aspects, the server 805 may train the first autoencoder (e.g., the first autoencoder 510 shown in Fig. 5) and provide the trained first autoencoder to the clients 810 and 815. The clients 810 and 815 may use federated learning to train the second autoencoder (e.g., the second autoencoder 520 shown in Fig. 5).

In some aspects, the server 805 may update the first autoencoder with a lower frequency than the second autoencoder. For example, the clients 810 and 815 may provide observed environmental vectors to the server 805 for training the first autoencoder infrequently. For example, in some aspects, performing a partial federated learning procedure may include performing a first plurality of training iterations associated with the first autoencoder according to a first training frequency and performing a second plurality of training iterations associated with the second autoencoder according to a second training frequency that is higher than the first training frequency.

As shown by reference numbers 820, the server 805 may transmit, and the clients 810 and 815 may receive, neural network parameters (e. g. , the parameters $\theta$ and $\phi$, described above, in connection with Fig. 5). As shown by reference number 825, the client 810 may determine updated parameters associated with the second autoencoder (shown as "AE2 parameters"). As shown by reference number 830, the client 810 may transmit, and the server 805 may receive, the updated parameters associated with the second autoencoder.

As shown by reference number 835, the client 815 may determine updated parameters associated with the second autoencoder (shown as "AE2 parameters"). As shown by reference number 840, the client 815 may transmit, and the server 805 may receive, the updated parameters associated with the second autoencoder. As shown by reference number 845, the server 805 may determine final updated parameters associated with the second autoencoder. The server 805 may use the final updated parameters associated with the second autoencoder to update a server autoencoder and a second client autoencoder.

As shown by reference numbers 850, the client 810 and the client 815 may transmit, and the server 805 may receive, observed environmental vectors. In some aspects, the clients 810 and 815 may provide the observed environmental vectors to the server 805 for training of a first autoencoder by the server 805. As shown by reference number 855, the server 805 may train the first autoencoder. The server 805 may train the first autoencoder based at least in part on the environmental vectors. As shown by reference numbers 860, the server 805 may transmit, and the clients 810 and 815 may receive, the first autoencoder.

As indicated above, Fig. 8 is provided merely as an example. Other examples may differ from what is described with regard to Fig. 8.

Fig. 9 is a diagram illustrating an example process 900 of fully federated learning for autoencoder pairs, in accordance with the present disclosure. The process 900 is an aspect of a fully federated learning process that may be performed, for example, by a client (e.g., client 710 shown in Fig. 7, client 715 shown in Fig. 7, client 605 shown in Fig. 6, client 302 shown in Fig. 3, and/or the like).

The process 900 may include receiving neural network parameters from a server (block 905). In some aspects, the neural network parameters may include a set of neural network parameters, $(\phi, \theta)$, associated with a first autoencoder and a second autoencoder. The process may further include obtaining an observed environmental vector and an observed wireless communication vector (block 910). For example, the client may obtain an observed environmental training vector, *f*, and an observed wireless communication training vector, x.

As shown, the process 900 may include determining a loss for the first autoencoder (block 915). For example, in some aspects, the client may determine a first loss corresponding to the first autoencoder by inputting the observed environmental training vector, *f,* to a first encoder of the first autoencoder to determine a training feature vector, *y*. The client may further input the training feature vector, y, to a first decoder of the first autoencoder to determine a first training output of the first autoencoder. The client may determine the first loss based at least in part on the first training output. In some aspects, the first loss may be associated with the set of neural network parameters. In some aspects, the client may determine a first regularization term corresponding to the first autoencoder. The client may determine the first loss based at least in part on the first regularization term.

The process 900 may further include determining a loss for the second autoencoder (block 920). In some aspects, for example, the client may determine a second loss corresponding to the second autoencoder by inputting the training feature vector, y, and the observed wireless communication training vector, x, to a second encoder of the second autoencoder to determine a training latent vector, *h*. The client may input the training feature vector, *y,* and the training latent vector, *h,* to a second decoder of the second autoencoder to determine a second training output of the second autoencoder. The client may determine a second loss associated with the second autoencoder based at least in part on the second training output. In some aspects, the second loss may be associated with the set of neural network parameters. In some aspects, the client may determine a second regularization term corresponding to the second autoencoder. The client may determine the second loss based at least in part on the second regularization term.

The process 900 may further include updating the neural network parameters (block 925). In some aspects, the client may update the neural network parameters by determining a total loss by summing the first loss and the second loss. The client may determine a plurality of gradients of the total loss with respect to the set of neural network parameters and update the set of neural network parameters based at least in part on the plurality of gradients.

In some aspects, the process 900 may further include repeating operations 910 - 925 a specified number of times (block 930). For example, the client may update the set of autoencoder parameters a specified number of times to determine a final set of updated autoencoder parameters. The process 900 may include providing the updated neural network parameters to the server (block 935). For example, the client may transmit the final set of updated autoencoder parameters to the server.

As indicated above, Fig. 9 is provided merely as an example. Other examples may differ from what is described with regard to Fig. 9.

Fig. 10 is a diagram illustrating an example process 1000 of federated learning for autoencoder pairs, in accordance with the present disclosure. The example process 1000 is an aspect of a fully federated learning process that may be performed, for example, by a server (e.g., server 705 shown in Fig. 7, server 610 shown in Fig. 6, server 304 shown in Fig. 3, and/or the like).

The process 1000 may include selecting a set of clients from which to receive updates (block 1005). For example, the server may select a set of clients from which to receive updates associated with a first client autoencoder and a second client autoencoder. The process 1000 may include transmitting a set of neural network parameters to the set of clients (block 1010). For example, the server may transmit a set of neural network parameters, $(\phi, \theta)$, to the set of clients.

The process 1000 may include receiving a plurality of sets of updated neural network parameters from the set of clients (block 1015). For example, the server may receive sets of updated neural network parameters, $(\phi, \theta)$, associated with the first client autoencoder and the second client autoencoder. The process 1000 may further include determining a final set of updated neural network parameters (block 1020). For example, the server may determine, based at least in part on the plurality of sets of updated neural network parameters, a final set of updated neural network parameters associated with the first client autoencoder and the second client autoencoder. As shown, the process 1000 may include returning to block 1005 (block 1025) and repeating the process 1000 with an additional set or sets of clients.

As indicated above, Fig. 10 is provided merely as an example. Other examples may differ from what is described with regard to Fig. 10.

Fig. 11 is a diagram illustrating an example 1100 of federated learning for autoencoder pairs, in accordance with the present disclosure. The example 1100 is an aspect of a fully federated learning procedure that may be performed, for example, by a client (e.g., client 710 shown in Fig. 7, client 715 shown in Fig. 7, client 605 shown in Fig. 6, client 302 shown in Fig. 3, and/or the like).

The process 1100 may include receiving neural network parameters from a server (block 1105). In some aspects, the neural network parameters may include a set of neural network parameters, $(\phi, \theta)$, associated with a first autoencoder and a second autoencoder. The process may further include obtaining an observed environmental training vector and an observed wireless communication training vector (block 1110). For example, the client may obtain an observed environmental training vector, $f$, and an observed wireless communication training vector, $x$.

As shown, the process 1100 may include determining a loss for the first client autoencoder (block 1115). For example, in some aspects, the client may determine a first loss corresponding to the first client autoencoder by inputting the observed environmental training vector, $f$, to a first encoder of the first client autoencoder to determine a training feature vector, $y$. The client may further input the training feature vector, $y$, to a first decoder of the first client autoencoder to determine a first training output of the first client autoencoder. The client may determine the first loss based at least in part on the first training output. In some aspects, the client may determine a first regularization term corresponding to the first client autoencoder. The client may determine the first loss based at least in part on the first regularization term.

The process 1100 may further include determining a loss for the second client autoencoder (block 1120). In some aspects, for example, the client may determine a second loss corresponding to the second client autoencoder by inputting the training feature vector, $y$, and the observed wireless communication training vector, $x$, to a second encoder of the second client autoencoder to determine a training latent vector, $h$. The client may input the training feature vector, $y$, and the training latent vector, $h$, to a second decoder of the second client autoencoder to determine a second training output of the second client autoencoder. The client may determine a second loss associated with the second client autoencoder based at least in part on the second training output. In some aspects, the second loss may be associated with the set of neural network parameters. In some aspects, the client may determine a second regularization term corresponding to the second client autoencoder. The client may determine the second loss based at least in part on the second regularization term.

The process 1100 may further include updating a set of autoencoder parameters associated with the first client autoencoder (block 1125). In some aspects, the client may update the neural network parameters by determining a total loss by summing the first loss and the second loss. The client may determine a plurality of gradients of the total loss associated with a set of autoencoder parameters, $(\phi_1, \theta_1)$.

In some aspects, the process 1100 may further include repeating operations 1110 - 1125 a specified number of times (block 1130). For example, the client may update the set of autoencoder parameters a specified number of times to determine a final set of updated autoencoder parameters. The process 1100 may include providing the updated autoencoder parameters to the server (block 1135).

As indicated above, Fig. 11 is provided merely as an example. Other examples may differ from what is described with regard to Fig. 11.

Fig. 12 is a diagram illustrating an example process 1200 of federated learning for autoencoder pairs, in accordance with the present disclosure. The example process 1200 is an aspect of a fully federated learning process that may be performed, for example, by a client (e.g., client 710 shown in Fig. 7, client 715 shown in Fig. 7, client 605 shown in Fig. 6, client 302 shown in Fig. 3, and/or the like).

The process 1200 may include receiving neural network parameters from a server (block 1205). In some aspects, the neural network parameters may include a set of neural network parameters, $(\phi, \theta)$, associated with a first client autoencoder and a second client autoencoder. The process 1200 may further include obtaining an observed environmental training vector and determining a feature training vector (block 1210). For example, the client may obtain an observed environmental training vector, $f$, and may determine a feature training vector, $y$, based at least in part on the observed environmental training vector, $f$.

The process 1200 may include obtaining an observed wireless communication training vector (block 1215) and determining a loss for the second client autoencoder (block 1220). For example, the client may obtain an observed wireless communication training vector, x, and input the feature training vector, y, and the observed wireless communication training vector, x, to a second encoder of the second client autoencoder to determine a training latent vector, $h$. The client may input the training feature vector, y, and the training latent vector, h, to a second decoder of the second autoencoder to determine a second training output of the second autoencoder. The client may determine a loss associated with the second autoencoder based at least in part on the second training output. In some aspects, the loss may be associated with the set of autoencoder parameters, $(\phi_2, \theta_2)$, associated with the second autoencoder.

The process 1200 may include updating the set of autoencoder parameters associated with the second client autoencoder (block 1225). In some aspects, the client may determine a plurality of gradients of the loss with respect to the set of autoencoder parameters associated with the second client autoencoder. The client may update the set of autoencoder parameters based at least in part on the plurality of gradients.

In some aspects, the process 1200 may further include repeating operations 1210 - 1225 a specified number of times (block 1230). For example, the client may update the set of autoencoder parameters associated with the second client autoencoder a specified number of times to determine a final set of updated autoencoder parameters associated with the second client autoencoder. The process 1200 may include providing the updated autoencoder parameters to the server (block 1235).

As indicated above, Fig. 12 is provided merely as an example. Other examples may differ from what is described with regard to Fig. 12.

Fig. 13 is a diagram illustrating an example process 1300 of federated learning for autoencoder pairs, in accordance with the present disclosure. The example process 1300 is an aspect of a fully federated learning process that may be performed, for example, by a server (e.g., server 705 shown in Fig. 7, server 610 shown in Fig. 6, server 304 shown in Fig. 3, and/or the like).

The process 1300 may include selecting a set of clients from which to receive updates (block 1305). The process 1300 may include transmitting a set of neural network parameters to the set of clients (block 1310). For example, the server may transmit a set of neural network parameters, $(\phi, \theta)$, to the set of clients.

The process 1300 may include receiving a plurality of sets of updated autoencoder parameters, $(\phi_1, \theta_1)$, associated with the first client autoencoder (block 1315). The process 1300 may further include determining a final set of updated autoencoder parameters associated with the first client autoencoder (block 1320) and returning to block 1305 (block 1325) to repeat the process 1300.

As indicated above, Fig. 13 is provided merely as an example. Other examples may differ from what is described with regard to Fig. 13.

Fig. 14 is a diagram illustrating an example 1400 of federated learning for autoencoder pairs, in accordance with the present disclosure. The example 1400 is an aspect of a fully federated learning procedure that may be performed, for example, by a server (e.g., server 705 shown in Fig. 7, server 610 shown in Fig. 6, server 304 shown in Fig. 3, and/or the like).

The process 1400 may include selecting a set of clients from which to receive updates (block 1405). The process 1400 may include transmitting a set of neural network parameters to the set of clients (block 1410). For example, the server may transmit a set of neural network parameters, $(\phi, \theta)$, to the set of clients.

The process 1400 may include receiving a plurality of sets of updated autoencoder parameters, $(\phi_2, \theta_2)$, associated with the second client autoencoder (block 1415). The process 1400 may further include determining a final set of updated autoencoder parameters associated with the second client autoencoder (block 1420) and returning to block 1405 (block 1425) to repeat the process 1400.

As indicated above, Fig. 14 is provided merely as an example. Other examples may differ from what is described with regard to Fig. 14.

Fig. 15 is a diagram illustrating an example process 1500 of federated learning for autoencoder pairs, in accordance with the present disclosure. The example process 1500 is an aspect of a partially federated learning procedure that may be performed, for example, by a client (e.g., client 810 shown in Fig. 8, client 815 shown in Fig. 8, client 605 shown in Fig. 6, client 302 shown in Fig. 3, and/or the like).

The process 1500 may include receiving neural network parameters from a server (block 1505). In some aspects, the neural network parameters may include a set of neural network parameters, $(\phi, \theta)$, associated with a first client autoencoder and a second client autoencoder. The process 1500 may further include obtaining an observed environmental training vector, $f$, and determining a feature training vector, y (block 1510). For example, the client may obtain an observed environmental training vector, $f$, and determine a feature training vector, y, based at least in part on the observed environmental training vector, $f$.

As shown, the process 1500 may include obtaining an observed wireless communication training vector (block 1515) and determining a loss for the second client autoencoder (block 1520). In some aspects, for example, the client may determine a second loss corresponding to the second client autoencoder by inputting the feature training vector, y, and the observed wireless communication training vector, x, to a second encoder of the second client autoencoder to determine a latent training vector, $h$. The client may input the feature training vector, $y$, and the latent vector, $h$, to a second decoder of the second client autoencoder to determine a second training output of the second client autoencoder. The client may determine a loss associated with the second client autoencoder based at least in part on the second training output. In some aspects, the loss may be associated with the set of autoencoder parameters, $(\phi_2, \theta_2)$, associated with the second client autoencoder. In some aspects, the client may determine a second regularization term corresponding to the second client autoencoder. The client may determine the second loss based at least in part on the second regularization term.

The process 1500 may include updating the set of autoencoder parameters associated with the second client autoencoder (block 1525). In some aspects, the client may determine a plurality of gradients of the loss with respect to the set of autoencoder parameters associated with the second client autoencoder. The client may update the set of autoencoder parameters based at least in part on the plurality of gradients.

In some aspects, the process 1500 may further include repeating operations 1510 - 1525 a specified number of times (block 1530). For example, the client may update the set of autoencoder parameters a specified number of times to determine a final set of updated autoencoder parameters. The process 1500 may include providing the updated set of autoencoder parameters associate with the second client autoencoder to the server (block 1535).

As indicated above, Fig. 15 is provided merely as an example. Other examples may differ from what is described with regard to Fig. 15.

Fig. 16 is a diagram illustrating an example process 1600 of federated learning for autoencoder pairs, in accordance with the present disclosure. The example process 1600 is an aspect of a partially federated learning process that may be performed, for example, by a server (e.g., server 805 shown in Fig. 8, server 610 shown in Fig. 6, server 304 shown in Fig. 3, and/or the like).

The process 1600 may include selecting a set of clients from which to receive observed environmental vectors, $f$ (block 1605). The process 1600 may include receiving observed environmental training vectors, $f$, from the set of clients (block 1610). As shown, the process 1600 may include determining a loss for the first client autoencoder (block 1615). For example, in some aspects, the server may determine a first loss corresponding to the first client autoencoder by inputting the observed environmental training vectors, $f$, to a first encoder of the first client autoencoder to determine a feature training vector, $y$. The server may further input the feature training vector, y, to a first decoder of the first client autoencoder to determine a first training output of the first client autoencoder. The server may determine the first loss based at least in part on the first training output. In some aspects, the server may determine a first regularization term corresponding to the first client autoencoder. The server may determine the first loss based at least in part on the first regularization term.

The process 1600 may further include determining a final set of updated autoencoder parameters associated with the first client autoencoder (block 1620). In some aspects, the server may update the neural network parameters by determining a plurality of gradients of the loss for the first autoencoder with respect to the set of autoencoder parameters, $(\phi_1, \theta_1)$, associated with the first client autoencoder. In some aspects, the process 1600 may further include repeating operations 1610 - 1620 a specified number of times (block 1625) and returning to block 1605 to repeat the process 1600 (block 1630).

As indicated above, Fig. 16 is provided merely as an example. Other examples may differ from what is described with regard to Fig. 16.

Fig. 17 is a diagram illustrating an example 1700 of federated learning for autoencoder pairs, in accordance with the present disclosure. The example 1700 is an aspect of a partially federated learning procedure that may be performed, for example, by a server (e.g., server 805 shown in Fig. 8, server 610 shown in Fig. 6, server 304 shown in Fig. 3, and/or the like).

The process 1700 may include selecting a set of clients from which to receive updates (block 1705). For example, the server may select a set of clients from which to receive updates associated with a second client autoencoder. The process 1700 may include transmitting a set of neural network parameters to the set of clients (block 1710). For example, the server may transmit a set of neural network parameters, $(\phi, \theta)$, to the set of clients.

The process 1700 may include receiving a plurality of sets of updated autoencoder parameters associated with the second client autoencoder from the set of clients (block 1715). For example, the server may receive sets of updated autoencoder parameters, $(\phi_2, \theta_2)$, associated with the second client autoencoder. The process 1700 may further include determining a final set of updated autoencoder parameters associated with the second client autoencoder (block 1720). For example, the server may determine the final set of updated autoencoder parameters associated with the second client autoencoder by averaging the respective updated parameters received form the clients. As shown, the process 1700 may include returning to block 1705 (block 1725) and repeating the process 1700 with an additional set or sets of clients.

As indicated above, Fig. 17 is provided merely as an example. Other examples may differ from what is described with regard to Fig. 17.

Fig. 18 is a diagram illustrating an example process 1800 performed, for example, by a client, in accordance with the present disclosure. Example process 1800 is an example where the client (e.g., client 302 shown in Fig. 3) performs operations associated with federated learning of autoencoder pairs for wireless communication.

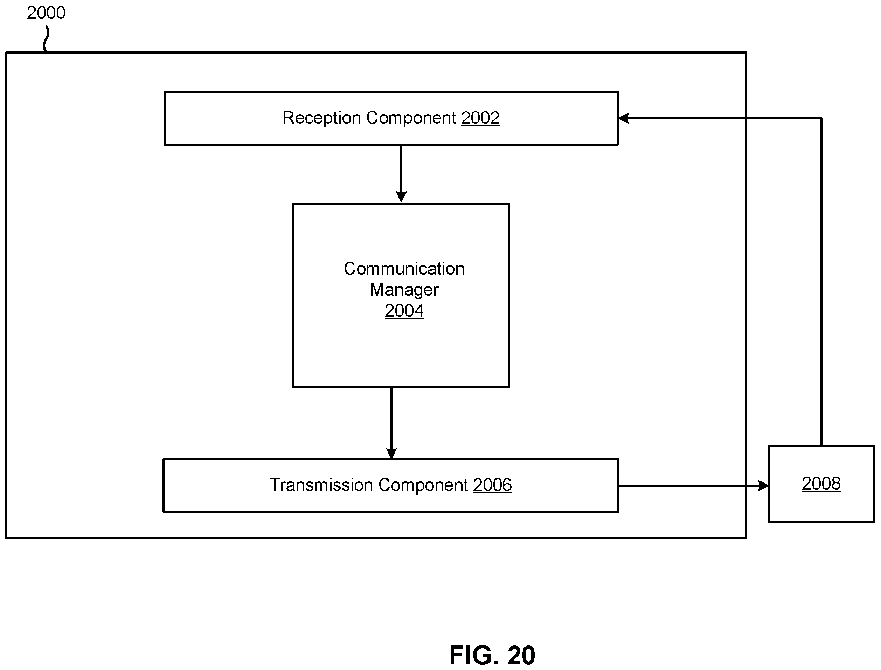

As shown in Fig. 18, in some aspects, process 1800 may include determining, using a first client autoencoder, a feature vector associated with one or more features associated with an environment of the client (block 1810). For example, the client (e.g., using communication manager 2004 of Fig. 20) may determine, using a first autoencoder, a feature vector associated with one or more features associated with an environment of the client, as described above.

As further shown in Fig. 18, in some aspects, process 1800 may include determining a latent vector using a second client autoencoder and based at least in part on the feature vector (block 1820). For example, the client (e.g., using communication manager 2004 of Fig. 20) may determine a latent vector using a second client autoencoder and based at least in part on the feature vector, as described above.

As further shown in Fig. 18, in some aspects, process 1800 may include transmitting the feature vector and the latent vector (block 1830). For example, the client (e.g., using transmission component 2006 of Fig. 20) may transmit the feature vector and the latent vector, as described above.

Process 1800 may include additional aspects, such as any single aspect or any combination of aspects described below and/or in connection with one or more other processes described elsewhere herein.

In a first aspect, the first client autoencoder comprises a first encoder configured to receive an observed environmental vector as input and to provide the feature vector as output, and a first decoder configured to receive the feature vector as input and to provide the observed environmental vector as output.

In a second aspect, alone or in combination with the first aspect, the second autoencoder comprises a second encoder configured to receive an observed wireless communication vector and the feature vector as input and to provide the latent vector as output, and a second decoder configured to receive the latent vector and the feature vector as input and to provide the observed wireless communication vector as output.

In a third aspect, alone or in combination with one or more of the first and second aspects, determining the feature vector comprises providing an observed environmental vector as input to the first autoencoder.

In a fourth aspect, alone or in combination with one or more of the first through third aspects, the observed environmental vector comprises one or more feature components, wherein the one or more feature components indicate a client vendor identifier, a client antenna configuration, a large scale channel characteristic, a channel state information reference signal configuration, an image obtained by an imaging device, a portion of an estimated propagation channel, or a combination thereof.

In a fifth aspect, alone or in combination with one or more of the first through fourth aspects, the large scale channel characteristic indicates a delay spread associated with a channel, a power delay profile associated with a channel, a Doppler measurement associated with a channel, a Doppler spectrum associated with a channel, a signal to noise ratio associated with a channel a signal to noise plus interference ratio associated with a channel, a reference signal received power, a received signal strength indicator, or a combination thereof.

In a sixth aspect, alone or in combination with one or more of the first through fifth aspects, the latent vector is associated with a wireless communication task.

In a seventh aspect, alone or in combination with one or more of the first through sixth aspects, the wireless communication task comprises determining channel state feedback (CSF), determining positioning information associated with the client, determining a modulation associated with a wireless communication, determining a waveform associated with a wireless communication, or a combination thereof.

In an eighth aspect, alone or in combination with one or more of the first through seventh aspects, the wireless communication task comprises determining the CSF, and process 1800 includes receiving a channel state information (CSI) reference signal (CSI-RS), determining CSI based at least in part on the CSI-RS, and providing the CSI as input to the second autoencoder.

In a ninth aspect, alone or in combination with one or more of the first through eighth aspects, the latent vector comprises compressed channel state feedback.

In a tenth aspect, alone or in combination with one or more of the first through ninth aspects, transmitting the feature vector and the latent vector comprises transmitting the feature vector and the latent vector using a physical uplink control channel, a physical uplink shared channel, or a combination thereof.

In an eleventh aspect, alone or in combination with one or more of the first through tenth aspects, at least one of the first autoencoder or the second autoencoder comprises a variational autoencoder.

In a twelfth aspect, alone or in combination with one or more of the first through eleventh aspects, process 1800 includes training at least one of the first autoencoder or the second autoencoder.

In a thirteenth aspect, alone or in combination with one or more of the first through twelfth aspects, training the at least one of the first autoencoder or the second autoencoder comprises using a reparameterization.

In a fourteenth aspect, alone or in combination with one or more of the first through thirteenth aspects, training the at least one of the first autoencoder or the second autoencoder comprises determining a set of neural network parameters that maximize a variational lower bound function corresponding to the first autoencoder and the second autoencoder.

In a fifteenth aspect, alone or in combination with one or more of the first through fourteenth aspects, a negative variational lower bound function corresponds to a sum of a first loss function associated with the first autoencoder and a second loss function associated with the second autoencoder.

In a sixteenth aspect, alone or in combination with one or more of the first through fifteenth aspects, the first loss function comprises a first reconstruction loss and a first regularization term for the first autoencoder, and the second loss function comprises a second reconstruction loss and a second regularization term for the second autoencoder.

In a seventeenth aspect, alone or in combination with one or more of the first through sixteenth aspects, the first autoencoder and the second autoencoder are regular autoencoders, and the variational lower bound function does not include a regularization term.

In an eighteenth aspect, alone or in combination with one or more of the first through seventeenth aspects, training the at least one of the first autoencoder or the second autoencoder comprises training at least one of the first autoencoder or the second autoencoder using a federated learning procedure.

In a nineteenth aspect, alone or in combination with one or more of the first through eighteenth aspects, training the at least one of the first autoencoder or the second autoencoder comprises training the first autoencoder and the second autoencoder to determine a format of the feature vector.

In a twentieth aspect, alone or in combination with one or more of the first through nineteenth aspects, training the at least one of the first autoencoder or the second autoencoder comprises using an unsupervised learning procedure.

In a twenty-first aspect, alone or in combination with one or more of the first through twentieth aspects, training the at least one of the first autoencoder or the second autoencoder comprises performing a fully federated learning procedure.

In a twenty-second aspect, alone or in combination with one or more of the first through twenty-first aspects, performing the fully federated learning procedure comprises jointly training the first autoencoder and the second autoencoder.

In a twenty-third aspect, alone or in combination with one or more of the first through twenty-second aspects, performing the fully federated learning procedure comprises alternating between training the first autoencoder and training the second autoencoder.

In a twenty-fourth aspect, alone or in combination with one or more of the first through twenty-third aspects, alternating between training the first autoencoder and training the second autoencoder comprises performing a first plurality of training iterations associated with the first autoencoder according to a first training frequency, and performing a second plurality of training iterations associated with the second autoencoder according to a second training frequency that is higher than the first training frequency.

In a twenty-fifth aspect, alone or in combination with one or more of the first through twenty-fourth aspects, training the at least one of the first autoencoder or the second autoencoder comprises performing a partial federated learning procedure.

In a twenty-sixth aspect, alone or in combination with one or more of the first through twenty-fifth aspects, performing the partial federated learning procedure comprises providing an observed environmental vector to a server, and receiving the first autoencoder from the server, wherein the first autoencoder is based at least in part on the observed environmental vector.

In a twenty-seventh aspect, alone or in combination with one or more of the first through twenty-sixth aspects, the first autoencoder is based at least in part on at least one additional environmental vector associated with at least one additional client.

In a twenty-eighth aspect, alone or in combination with one or more of the first through twenty-seventh aspects, performing the partial federated learning procedure comprises updating the second autoencoder to determine a set of updated neural network parameters, and transmitting the set of updated neural network parameters to a server.

In a twenty-ninth aspect, alone or in combination with one or more of the first through twenty-eighth aspects, performing the partial federated learning procedure comprises performing a first plurality of training iterations associated with the first autoencoder according to a first training frequency, wherein performing a training iteration of the first plurality of training iterations comprises providing an observed environmental vector to a server, and receiving an updated first autoencoder from the server, wherein the updated first autoencoder is based at least in part on the observed environmental vector, and performing a second plurality of training iterations associated with the second autoencoder according to a second training frequency that is higher than the first training frequency.

In a thirtieth aspect, alone or in combination with one or more of the first through twenty-ninth aspects, performing the partial federated learning procedure comprises receiving, from a server, a set of neural network parameters associated with the first autoencoder and the second autoencoder, obtaining an observed environmental training vector, inputting the observed environmental training vector to a first encoder of the first autoencoder to determine a training feature vector, obtaining an observed wireless communication training vector, inputting the training feature vector and the observed wireless communication training vector to a second encoder of the second autoencoder to determine a training latent vector, inputting the training feature vector and the training latent vector to a second decoder of the second autoencoder to determine a second training output of the second autoencoder, and determining a loss associated with the second autoencoder based at least in part on the second training output, wherein the loss is associated with the set of neural network parameters.

In a thirty-first aspect, alone or in combination with one or more of the first through thirtieth aspects, process 1800 includes determining a plurality of gradients of the loss with respect to a set of autoencoder parameters, wherein the set of autoencoder parameters corresponds to the second autoencoder, and updating the set of autoencoder parameters based at least in part on the plurality of gradients.

In a thirty-second aspect, alone or in combination with one or more of the first through thirty-first aspects, process 1800 includes updating the set of autoencoder parameters a specified number of times to determine a final set of updated autoencoder parameters.

In a thirty-third aspect, alone or in combination with one or more of the first through thirty-second aspects, process 1800 includes transmitting the final set of updated autoencoder parameters to the server.

In a thirty-fourth aspect, alone or in combination with one or more of the first through thirty-third aspects, process 1800 includes determining a first loss corresponding to the first autoencoder, wherein determining the first loss comprises receiving, from a server, a set of neural network parameters associated with the first autoencoder and the second autoencoder, obtaining an observed environmental training vector, inputting the observed environmental training vector to a first encoder of the first autoencoder to determine a training feature vector, inputting the training feature vector to a first decoder of the first autoencoder to determine a first training output of the first autoencoder, and determining the first loss based at least in part on the first training output, wherein the first loss is associated with the set of neural network parameters.

In a thirty-fifth aspect, alone or in combination with one or more of the first through thirty-fourth aspects, process 1800 includes determining a second loss corresponding to the second autoencoder, wherein determining the second loss comprises obtaining an observed wireless communication training vector, inputting the training feature vector and the observed wireless communication training vector to a second encoder of the second autoencoder to determine a training latent vector, inputting the training feature vector and the training latent vector to a second decoder of the second autoencoder to determine a second training output of the second autoencoder, and determining a second loss associated with the second autoencoder based at least in part on the second training output, wherein the second loss is associated with the set of neural network parameters.

In a thirty-sixth aspect, alone or in combination with one or more of the first through thirty-fifth aspects, process 1800 includes determining a first regularization term corresponding to the first autoencoder, and determining a second regularization term corresponding to the second autoencoder, wherein determining the first loss comprises determining the first loss based at least in part on the first regularization term, and wherein determining the second loss comprises determining the second loss based at least in part on the second regularization term.

In a thirty-seventh aspect, alone or in combination with one or more of the first through thirty-sixth aspects, process 1800 includes determining a total loss by summing the first loss and the second loss.

In a thirty-eighth aspect, alone or in combination with one or more of the first through thirty-seventh aspects, process 1800 includes determining a plurality of gradients of the total loss with respect to the set of neural network parameters, and updating the set of neural network parameters based at least in part on the plurality of gradients.

In a thirty-ninth aspect, alone or in combination with one or more of the first through thirty-eighth aspects, process 1800 includes updating the set of neural network parameters a specified number of times to determine a final set of updated neural network parameters.

In a fortieth aspect, alone or in combination with one or more of the first through thirty-ninth aspects, process 1800 includes transmitting the final set of updated neural network parameters to the server.

In a forty-first aspect, alone or in combination with one or more of the first through fortieth aspects, process 1800 includes determining a first plurality of gradients of the total loss with respect to a first set of autoencoder parameters associated with the first autoencoder, and updating the first set of autoencoder parameters based at least in part on the first plurality of gradients.

In a forty-second aspect, alone or in combination with one or more of the first through forty-first aspects, process 1800 includes updating the first set of autoencoder parameters a specified number of times to determine a final first set of updated autoencoder parameters.

In a forty-third aspect, alone or in combination with one or more of the first through forty-second aspects, process 1800 includes transmitting the final first set of updated autoencoder parameters to the server.

In a forty-fourth aspect, alone or in combination with one or more of the first through forty-third aspects, process 1800 includes determining a second plurality of gradients of the second loss with respect to a second set of autoencoder parameters associated with the second autoencoder, and updating the second set of autoencoder parameters based at least in part on the second plurality of gradients.

In a forty-fifth aspect, alone or in combination with one or more of the first through forty-fourth aspects, process 1800 includes updating the second set of autoencoder parameters a specified number of times to determine a final second set of updated autoencoder parameters.

In a forty-sixth aspect, alone or in combination with one or more of the first through forty-fifth aspects, process 1800 includes transmitting the final second set of updated autoencoder parameters to the server.

Although Fig. 18 shows example blocks of process 1800, in some aspects, process 1800 may include additional blocks, fewer blocks, different blocks, or differently arranged blocks than those depicted in Fig. 18. Additionally, or alternatively, two or more of the blocks of process 1800 may be performed in parallel.

Fig. 19 is a diagram illustrating an example process 1900 performed, for example, by a server, in accordance with the present disclosure. Example process 1900 is an example where the server (e.g., server 304 shown in Fig. 3) performs operations associated with federated learning of autoencoder pairs for wireless communication.

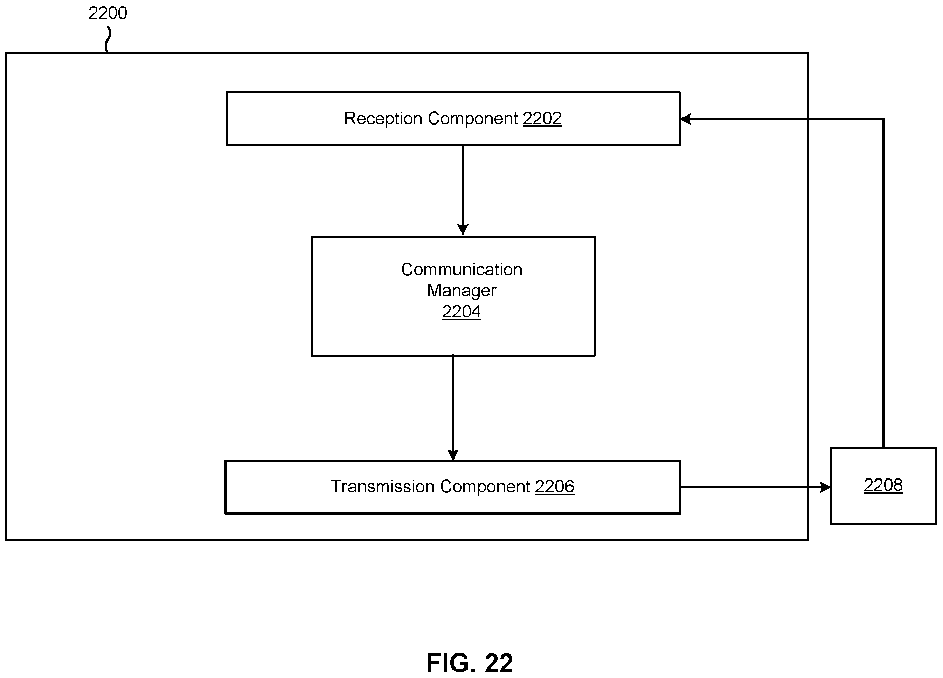

As shown in Fig. 19, in some aspects, process 1900 may include receiving, from a client, a feature vector associated with one or more features associated with an environment of the client (block 1910). For example, the server (e.g., using reception component 2202 of Fig. 22) may receive, from a client, a feature vector associated with one or more features associated with an environment of the client, as described above.

As further shown in Fig. 19, in some aspects, process 1900 may include receiving, from the client, a latent vector that is based at least in part on the feature vector (block 1920). For example, the server (e.g., using reception component 2202 of Fig. 22) may receive, from the client, a latent vector that is based at least in part on the feature vector, as described above.

As further shown in Fig. 19, in some aspects, process 1900 may include determining an observed wireless communication vector based at least in part on the feature vector and the latent vector (block 1930). For example, the server (e.g., using communication manager 2204 of Fig. 22) may determine an observed wireless communication vector based at least in part on the feature vector and the latent vector, as described above.

As further shown in Fig. 19, in some aspects, process 1900 may include performing a wireless communication action based at least in part on determining the observed wireless communication vector (block 1940). For example, the server (e.g., using communication manager 2204 of Fig. 22) may perform a wireless communication action based at least in part on determining the observed wireless communication vector, as described above.

Process 1900 may include additional aspects, such as any single aspect or any combination of aspects described below and/or in connection with one or more other processes described elsewhere herein.

In a first aspect, the feature vector is based at least in part on an observed environmental vector.

In a second aspect, alone or in combination with the first aspect, the observed environmental vector comprises one or more feature components, wherein the one or more feature components indicate a client vendor identifier, a client antenna configuration, a large scale channel characteristic, a channel state information reference signal configuration, an image obtained by an imaging device, a portion of an estimated propagation channel, or a combination thereof.

In a third aspect, alone or in combination with one or more of the first and second aspects, the large scale channel characteristic indicates a delay spread associated with a channel, a power delay profile associated with a channel, a Doppler measurement associated with a channel, a Doppler spectrum associated with a channel, a signal to noise ratio associated with a channel a signal to noise plus interference ratio associated with a channel, a reference signal received power, a received signal strength indicator, or a combination thereof.

In a fourth aspect, alone or in combination with one or more of the first through third aspects, the observed wireless communication vector is associated with a wireless communication task.

In a fifth aspect, alone or in combination with one or more of the first through fourth aspects, the wireless communication task comprises receiving channel state feedback (CSF), receiving positioning information associated with the UE, receiving a modulation associated with a wireless communication, receiving a waveform associated with a wireless communication, or a combination thereof.

In a sixth aspect, alone or in combination with one or more of the first through fifth aspects, the wireless communication task comprises receiving the CSF, and process 1900 includes transmitting a channel state information reference signal (CSI-RS), wherein the CSF corresponds to the CSI-RS.

In a seventh aspect, alone or in combination with one or more of the first through sixth aspects, the latent vector comprises compressed channel state feedback.

In an eighth aspect, alone or in combination with one or more of the first through seventh aspects, the feature vector and the latent vector are carried in a physical uplink control channel, a physical uplink shared channel, or a combination thereof.

In a ninth aspect, alone or in combination with one or more of the first through eighth aspects, determining the observed wireless communication vector comprises inputting the feature vector and the latent vector into a decoder of an autoencoder.

In a tenth aspect, alone or in combination with one or more of the first through ninth aspects, the autoencoder comprises a regular autoencoder or a variational autoencoder.

In an eleventh aspect, alone or in combination with one or more of the first through tenth aspects, the autoencoder corresponds to a second client autoencoder of a pair of client autoencoders, the pair of client autoencoders comprising a first client autoencoder and the second client autoencoder.

In a twelfth aspect, alone or in combination with one or more of the first through eleventh aspects, the first client autoencoder comprises a first encoder configured to receive the observed environmental vector as input and to provide the feature vector as output, and a first decoder configured to receive the feature vector as input and to provide the observed environmental vector as output.

In a thirteenth aspect, alone or in combination with one or more of the first through twelfth aspects, the second client autoencoder comprises a second encoder configured to receive the observed wireless communication vector and the feature vector as input and to provide the latent vector as output, and a second decoder configured to receive the latent vector and the feature vector as input and to provide the observed wireless communication vector as output.

In a fourteenth aspect, alone or in combination with one or more of the first through thirteenth aspects, process 1900 includes performing a partial federated learning procedure comprising training the first client autoencoder, and transmitting the first client autoencoder to the client.

In a fifteenth aspect, alone or in combination with one or more of the first through fourteenth aspects, performing the partial federated learning procedure comprises performing a first plurality of training iterations associated with the first client autoencoder according to a first training frequency, wherein performing a training iteration of the first plurality of training iterations comprises receiving an observed environmental training vector from the client, and transmitting an updated first client autoencoder to the client, wherein the updated first client autoencoder is based at least in part on the observed environmental training vector, and performing a second plurality of training iterations associated with the second autoencoder according to a second training frequency that is higher than the first training frequency.

In a sixteenth aspect, alone or in combination with one or more of the first through fifteenth aspects, process 1900 includes transmitting the first client autoencoder to at least one additional client.

In a seventeenth aspect, alone or in combination with one or more of the first through sixteenth aspects, training the first client autoencoder comprises using an unsupervised learning procedure.

In an eighteenth aspect, alone or in combination with one or more of the first through seventeenth aspects, process 1900 includes receiving an observed environmental training vector from the client, wherein training the first client autoencoder comprises training the first client autoencoder based at least in part on the observed environmental training vector.

In a nineteenth aspect, alone or in combination with one or more of the first through eighteenth aspects, process 1900 includes receiving at least one additional observed environmental training vector from at least one additional client, wherein training the first client autoencoder comprises training the first client autoencoder based at least in part on the at least one additional observed environmental training vector.

In a twentieth aspect, alone or in combination with one or more of the first through nineteenth aspects, process 1900 includes selecting a set of clients from which to receive a set observed environmental training vectors, wherein the set of clients includes the client and the at least one additional client.

In a twenty-first aspect, alone or in combination with one or more of the first through twentieth aspects, training the first client autoencoder comprises determining a loss corresponding to the first client autoencoder, wherein determining the loss comprises obtaining a set of neural network parameters associated with the first client autoencoder and the second client autoencoder, receiving an observed environmental training vector from the client, inputting the observed environmental training vector to an encoder of the first client autoencoder to determine a training feature vector, inputting the training feature vector to a decoder of the first client autoencoder to determine a training output of the first client autoencoder, and determining the loss based at least in part on the training output, wherein the loss is associated with the set of neural network parameters.

In a twenty-second aspect, alone or in combination with one or more of the first through twenty-first aspects, process 1900 includes determining a regularization term corresponding to the first client autoencoder, wherein determining the loss comprises determining the loss based at least in part on the regularization term.

In a twenty-third aspect, alone or in combination with one or more of the first through twenty-second aspects, process 1900 includes determining a plurality of gradients of the loss with respect to the set of autoencoder parameters, and updating a set of autoencoder parameters based at least in part on the plurality of gradients, wherein the set of autoencoder parameters correspond to the first client autoencoder.

In a twenty-fourth aspect, alone or in combination with one or more of the first through twenty-third aspects, process 1900 includes updating the set of autoencoder parameters a specified number of times to determine a final set of updated autoencoder parameters.

In a twenty-fifth aspect, alone or in combination with one or more of the first through twenty-fourth aspects, performing the partial federated learning procedure comprises selecting a set of clients from which to receive updates associated with the second client autoencoder, wherein the set of clients includes the client and at least one additional client, transmitting, to the set of clients, a set of neural network parameters associated with the first client autoencoder and the second client autoencoder, receiving, from the set of clients, a plurality of sets of updated autoencoder parameters associated with the second client autoencoder, and determining, based at least in part on the plurality of sets of updated autoencoder parameters, a final set of updated autoencoder parameters associated with the second client autoencoder.

In a twenty-sixth aspect, alone or in combination with one or more of the first through twenty-fifth aspects, process 1900 includes transmitting, to the set of clients, the final set of updated autoencoder parameters associated with the second client autoencoder.

In a twenty-seventh aspect, alone or in combination with one or more of the first through twenty-sixth aspects, determining the final set of updated autoencoder parameters associated with the second client autoencoder comprises averaging the plurality of sets of updated autoencoder parameters.

In a twenty-eighth aspect, alone or in combination with one or more of the first through twenty-seventh aspects, process 1900 includes selecting a set of clients from which to receive updates associated with the first client autoencoder and the second client autoencoder, wherein the set of clients includes the client and at least one additional client, transmitting, to the set of clients, a set of neural network parameters associated with the first client autoencoder and the second client autoencoder, receiving, from the set of clients, a plurality of sets of updated neural network parameters associated with the first client autoencoder and the second client autoencoder, and determining, based at least in part on the plurality of sets of updated neural network parameters, a final set of updated neural network parameters associated with the first client autoencoder and the second client autoencoder.

In a twenty-ninth aspect, alone or in combination with one or more of the first through twenty-eighth aspects, process 1900 includes transmitting, to the set of clients, the final set of updated neural network parameters associated with the first client autoencoder and the second client autoencoder.

In a thirtieth aspect, alone or in combination with one or more of the first through twenty-ninth aspects, determining the final set of updated neural network parameters associated with the first client autoencoder and the second client autoencoder comprises averaging the plurality of sets of updated neural network parameters.

In a thirty-first aspect, alone or in combination with one or more of the first through thirtieth aspects, process 1900 includes selecting a set of clients from which to receive updates associated with the first client autoencoder, wherein the set of clients includes the client and at least one additional client, transmitting, to the set of clients, a set of autoencoder parameters associated with the first client autoencoder and the second client autoencoder, receiving, from the set of clients, a plurality of sets of updated autoencoder parameters associated with the first client autoencoder, and determining, based at least in part on the plurality of sets of updated autoencoder parameters, a final set of updated autoencoder parameters associated with the first client autoencoder.

In a thirty-second aspect, alone or in combination with one or more of the first through thirty-first aspects, process 1900 includes transmitting, to the set of clients, the final set of updated autoencoder parameters associated with the first client autoencoder.

In a thirty-third aspect, alone or in combination with one or more of the first through thirty-second aspects, determining the final set of updated autoencoder parameters associated with the first client autoencoder comprises averaging the plurality of sets of updated autoencoder parameters.

Although Fig. 19 shows example blocks of process 1900, in some aspects, process 1900 may include additional blocks, fewer blocks, different blocks, or differently arranged blocks than those depicted in Fig. 19. Additionally, or alternatively, two or more of the blocks of process 1900 may be performed in parallel.

Fig. 20 is a block diagram of an example apparatus 2000 for wireless communication in accordance with the present disclosure. The apparatus 2000 may be a client, or a client may include the apparatus 2000. In some aspects, the apparatus 2000 includes a reception component 2002, a communication manager 2004, and a transmission component 2006, which may be in communication with one another (for example, via one or more buses). As shown, the apparatus 2000 may communicate with another apparatus 2008 (such as a server, a client, a UE, a base station, or another wireless communication device) using the reception component 2002 and the transmission component 2006.

In some aspects, the apparatus 2000 may be configured to perform one or more operations described herein in connection with Figs. 3-17. Additionally or alternatively, the apparatus 2000 may be configured to perform one or more processes described herein, such as process 1800 of Fig. 18. In some aspects, the apparatus 2000 may include one or more components of the first UE described above in connection with Fig. 2.

The reception component 2002 may provide means for receiving communications, such as reference signals, control information, data communications, or a combination thereof, from the apparatus 2008. The reception component 2002 may provide received communications to one or more other components of the apparatus 2000, such as the communication manager 2004. In some aspects, the reception component 2002 may provide means for signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components. In some aspects, the reception component 2002 may include one or more antennas, a demodulator, a MIMO detector, a receive processor, a controller/processor, a memory, or a combination thereof, of the first UE described above in connection with Fig. 2.

The transmission component 2006 may provide means for transmitting communications, such as reference signals, control information, data communications, or a combination thereof, to the apparatus 2008. In some aspects, the communication manager 2004 may generate communications and may transmit the generated communications to the transmission component 2006 for transmission to the apparatus 2008. In some aspects, the transmission component 2006 may provide means for performing signal processing on the generated communications (such as filtering, amplification, modulation, digital-to-analog conversion, multiplexing, interleaving, mapping, or encoding, among other examples), and may transmit the processed signals to the apparatus 2008. In some aspects, the transmission component 2006 may include one or more antennas, a modulator, a transmit MIMO processor, a transmit processor, a controller/-processor, a memory, or a combination thereof, of the first UE described above in connection with Fig. 2. In some aspects, the transmission component 2006 may be co-located with the reception component 2002 in a transceiver.

In some aspects, the communication manager 2004 may provide means for determining, using a first autoencoder, a feature vector associated with one or more features associated with an environment of the client; means for determining a latent vector using a second autoencoder and based at least in part on the feature vector; and means for transmitting the feature vector and the latent vector. In some aspects, the communication manager 2004 may include a controller/processor, a memory, or a combination thereof, of the first UE described above in connection with Fig. 2.

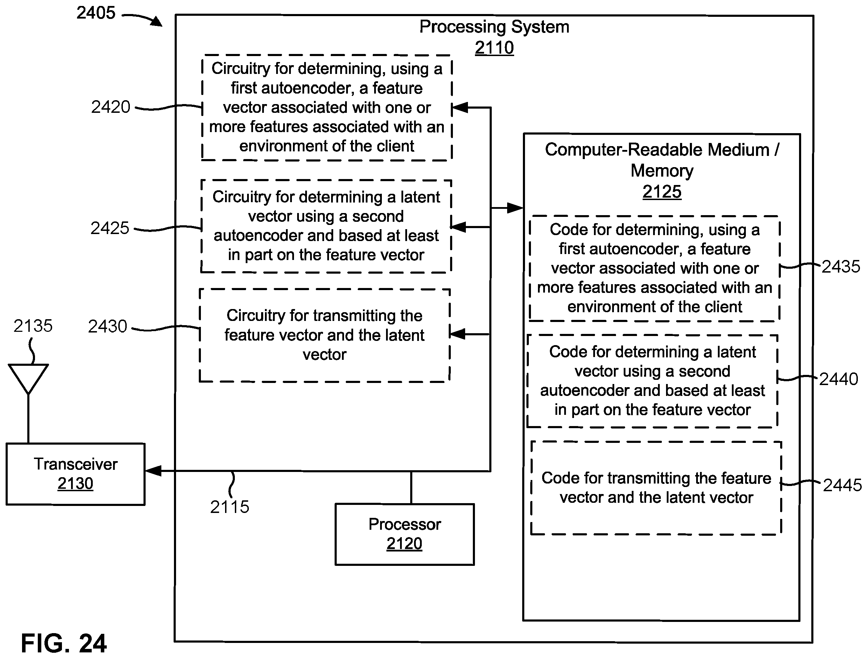

In some aspects, the communication manager 2004 and/or one or more components of the set of components may include or may be implemented within hardware (e.g., one or more of the circuitry described in connection with Fig. 24). In some aspects, the communication manager 2004 and/or one or more components of the set of components may include or may be implemented within a controller/processor, a memory, or a combination thereof, of the UE 120 described above in connection with Fig. 2.

In some aspects, the communication manager 2004 and/or one or more components of the set of components may be implemented in code (e.g., as software or firmware stored in a memory), such as the code described in connection with Fig. 24. For example, the communication manager 2004 and/or a component (or a portion of a component) may be implemented as instructions or code stored in a non-transitory computer-readable medium and executable by a controller or a processor to perform the functions or operations of the communication manager 2004 and/or the component. If implemented in code, the functions of the communication manager 2004 and/or a component may be executed by a controller/processor, a memory, a scheduler, a communication unit, or a combination thereof, of the UE 120 described above in connection with Fig. 2.

The number and arrangement of components shown in Fig. 20 are provided as an example. In practice, there may be additional components, fewer components, different components, or differently arranged components than those shown in Fig. 20. Furthermore, two or more components shown in Fig. 20 may be implemented within a single component, or a single component shown in Fig. 20 may be implemented as multiple, distributed components. Additionally or alternatively, a set of (one or more) components shown in Fig. 20 may perform one or more functions described as being performed by another set of components shown in Fig. 20.

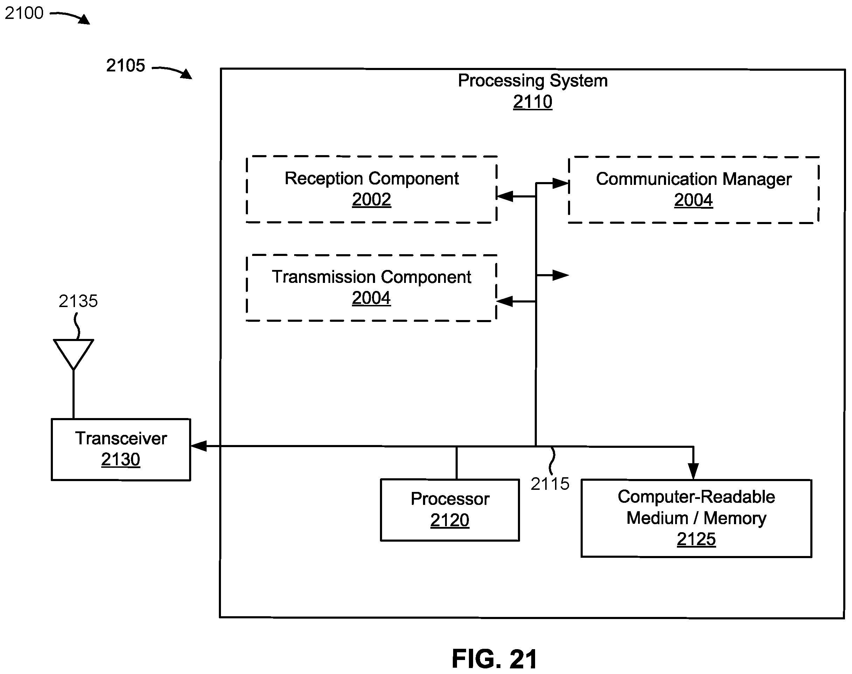

Fig. 21 is a diagram illustrating an example 2100 of a hardware implementation for an apparatus 2105 employing a processing system 2110. The apparatus 2105 may be a client.

The processing system 2110 may be implemented with a bus architecture, represented generally by bus 2115. The bus 2115 may include any number of interconnecting buses and bridges depending on the specific application of the processing system 2110 and the overall design constraints. The bus 2115 links together various circuits including one or more processors and/or hardware components, represented by processor 2120, the illustrated components, and computer-readable medium / memory 2125. The bus 2115 may also link various other circuits, such as timing sources, peripherals, voltage regulators, power management circuits, and/or the like.

The processing system 2110 may be coupled to a transceiver 2130. The transceiver 2130 is coupled to one or more antennas 2135. The transceiver 2130 provides a means for communicating with various other apparatuses over a transmission medium. The transceiver 2130 receives a signal from the one or more antennas 2135, extracts information from the received signal, and provides the extracted information to the processing system 2110, specifically the reception component 2002. In addition, the transceiver 2130 receives information from the processing system 2110, specifically the transmission component 2006, and generates a signal to be applied to the one or more antennas 2135 based at least in part on the received information.

The processing system 2110 includes a processor 2120 coupled to a computer-readable medium / memory 2125. The processor 2120 is responsible for general processing, including the execution of software stored on the computer-readable medium / memory 2125. The software, when executed by the processor 2120, causes the processing system 2110 to perform the various functions described herein for any particular apparatus. The computer-readable medium / memory 2125 may also be used for storing data that is manipulated by the processor 2120 when executing software. The processing system further includes at least one of the illustrated components. The components may be software modules running in the processor 2120, resident/stored in the computer readable medium / memory 2125, one or more hardware modules coupled to the processor 2120, or some combination thereof.

In some aspects, the processing system 2110 may be a component of the UE 120 and may include the memory 282 and/or at least one of the TX MIMO processor 266, the RX processor 258, and/or the controller/processor 280. In some aspects, the apparatus 2105 for wireless communication provides means for determining, using a first client autoencoder, a feature vector associated with one or more features associated with an environment of the client; determining a latent vector using a second client autoencoder and based at least in part on the feature vector; and transmitting the feature vector and the latent vector. The aforementioned means may be one or more of the aforementioned components of the apparatus 2000 and/or the processing system 2110 of the apparatus 2105 configured to perform the functions recited by the aforementioned means. As described elsewhere herein, the processing system 2110 may include the TX MIMO processor 266, the RX processor 258, and/or the controller/processor 280. In one configuration, the aforementioned means may be the TX MIMO processor 266, the RX processor 258, and/or the controller/processor 280 configured to perform the functions and/or operations recited herein.

Fig. 21 is provided as an example. Other examples may differ from what is described in connection with Fig. 21.

Fig. 22 is a block diagram of an example apparatus 2200 for wireless communication in accordance with the present disclosure. The apparatus 2200 may be a server, or a server may include the apparatus 2200. In some aspects, the apparatus 2200 includes a reception component 2202, a communication manager 2204, and a transmission component 2206, which may be in communication with one another (for example, via one or more buses). As shown, the apparatus 2200 may communicate with another apparatus 2208 (such as a client, a UE, a server, a base station, or another wireless communication device) using the reception component 2202 and the transmission component 2206.

In some aspects, the apparatus 2200 may be configured to perform one or more operations described herein in connection with Figs. 3-17. Additionally or alternatively, the apparatus 2200 may be configured to perform one or more processes described herein, such as process 1900 of Fig. 19. In some aspects, the apparatus 2200 may include one or more components of the base station described above in connection with Fig. 2.

The reception component 2202 may provide means for receiving communications, such as reference signals, control information, data communications, or a combination thereof, from the apparatus 2208. The reception component 2202 may provide received communications to one or more other components of the apparatus 2200, such as the communication manager 2204. In some aspects, the reception component 2202 may provide means for performing signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components. In some aspects, the reception component 2202 may include one or more antennas, a demodulator, a MIMO detector, a receive processor, a controller/processor, a memory, or a combination thereof, of the base station described above in connection with Fig. 2.

The transmission component 2206 may provide means for transmitting communications, such as reference signals, control information, data communications, or a combination thereof, to the apparatus 2208. In some aspects, the communication manager 2204 may generate communications and may transmit the generated communications to the transmission component 2206 for transmission to the apparatus 2208. In some aspects, the transmission component 2206 may provide means for performing signal processing on the generated communications (such as filtering, amplification, modulation, digital-to-analog conversion, multiplexing, interleaving, mapping, or encoding, among other examples), and may transmit the processed signals to the apparatus 2208. In some aspects, the transmission component 2206 may include one or more antennas, a modulator, a transmit MIMO processor, a transmit processor, a controller/-processor, a memory, or a combination thereof, of the base station described above in connection with Fig. 2. In some aspects, the transmission component 2206 may be co-located with the reception component 2202 in a transceiver.

The communication manager 2204 may provide means for receiving, from a client, a feature vector associated with one or more features associated with an environment of the client; receiving, from the client, a latent vector that is based at least in part on the feature vector; determining an observed wireless communication vector based at least in part on the feature vector and the latent vector; and performing a wireless communication action based at least in part on determining the observed wireless communication vector. In some aspects, the communication manager 2204 may include a controller/processor, a memory, a scheduler, a communication unit, or a combination thereof, of the base station described above in connection with Fig. 2.

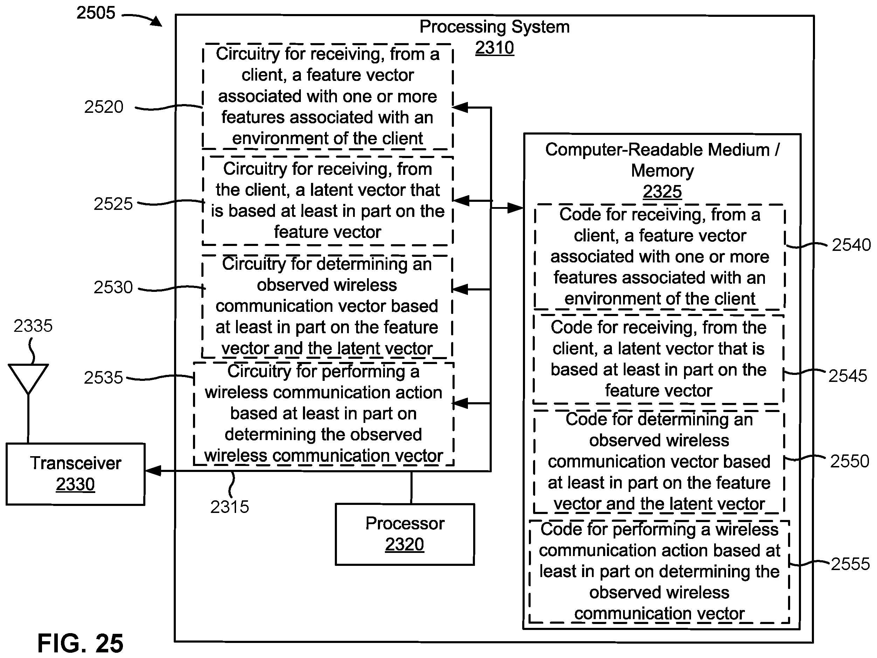

In some aspects, the communication manager 2204 and/or one or more components of the set of components may include or may be implemented within hardware (e.g., one or more of the circuitry described in connection with Fig. 25). In some aspects, the communication manager 2204 and/or one or more components of the set of components may include or may be implemented within a controller/processor, a memory, or a combination thereof, of the BS 110 described above in connection with Fig. 2.

In some aspects, the communication manager 2204 and/or one or more components of the set of components may be implemented in code (e.g., as software or firmware stored in a memory), such as the code described in connection with Fig. 25. For example, the communication manager 2204 and/or a component (or a portion of a component) may be implemented as instructions or code stored in a non-transitory computer-readable medium and executable by a controller or a processor to perform the functions or operations of the communication manager 2204 and/or the component. If implemented in code, the functions of the communication manager 2204 and/or a component may be executed by a controller/processor, a memory, a scheduler, a communication unit, or a combination thereof, of the BS 110 described above in connection with Fig. 2.

The number and arrangement of components shown in Fig. 22 are provided as an example. In practice, there may be additional components, fewer components, different components, or differently arranged components than those shown in Fig. 22. Furthermore, two or more components shown in Fig. 22 may be implemented within a single component, or a single component shown in Fig. 22 may be implemented as multiple, distributed components. Additionally or alternatively, a set of (one or more) components shown in Fig. 22 may perform one or more functions described as being performed by another set of components shown in Fig. 22.

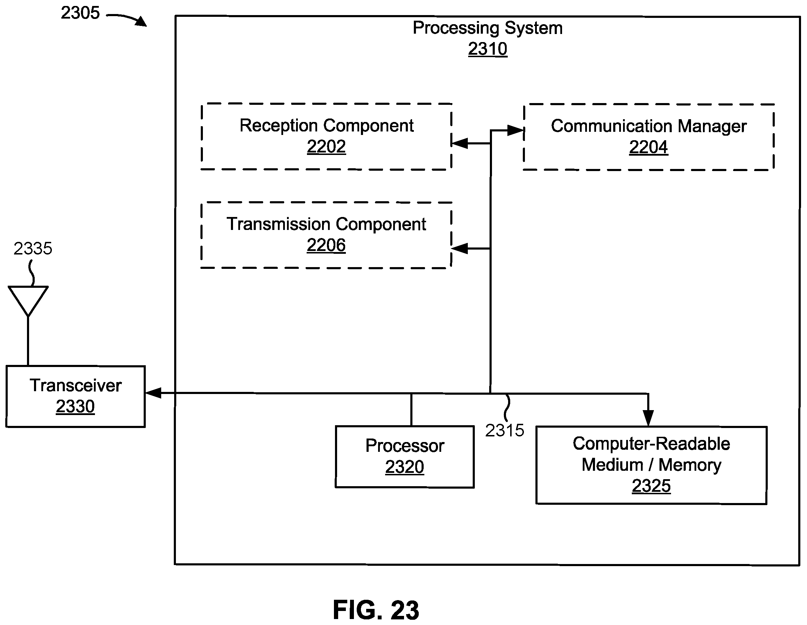

Fig. 23 is a diagram illustrating an example 2300 of a hardware implementation for an apparatus 2305 employing a processing system 2310. The apparatus 2305 may be a server.

The processing system 2310 may be implemented with a bus architecture, represented generally by a bus 2315. The bus 2315 may include any number of interconnecting buses and bridges depending on the specific application of the processing system 2310 and the overall design constraints. The bus 2315 links together various circuits including one or more processors and/or hardware components, represented by a processor 2320, the illustrated components, and a computer-readable medium / memory 2325. The bus 2315 may also link various other circuits, such as timing sources, peripherals, voltage regulators, power management circuits, and/or the like.

The processing system 2310 may be coupled to a transceiver 2330. The transceiver 2330 is coupled to one or more antennas 2335. The transceiver 2330 provides a means for communicating with various other apparatuses over a transmission medium. The transceiver 2330 receives a signal from the one or more antennas 2335, extracts information from the received signal, and provides the extracted information to the processing system 2310, specifically the reception component 2202. In addition, the transceiver 2330 receives information from the processing system 2310, specifically the transmission component 2206, and generates a signal to be applied to the one or more antennas 2335 based at least in part on the received information.

The processing system 2310 includes a processor 2320 coupled to a computer-readable medium / memory 2325. The processor 2320 is responsible for general processing, including the execution of software stored on the computer-readable medium / memory 2325. The software, when executed by the processor 2320, causes the processing system 2310 to perform the various functions described herein for any particular apparatus. The computer-readable medium / memory 2325 may also be used for storing data that is manipulated by the processor 2320 when executing software. The processing system further includes at least one of the illustrated components. The components may be software modules running in the processor 2320, resident/stored in the computer readable medium / memory 2325, one or more hardware modules coupled to the processor 2320, or some combination thereof.

In some aspects, the processing system 2310 may be a component of the base station 110 and may include the memory 242 and/or at least one of the TX MIMO processor 230, the RX processor 238, and/or the controller/processor 240. In some aspects, the apparatus 2305 for wireless communication includes means for receiving, from a client, a feature vector associated with one or more features associated with an environment of the client; receiving, from the client, a latent vector that is based at least in part on the feature vector; determining an observed wireless communication vector based at least in part on the feature vector and the latent vector; and performing a wireless communication action based at least in part on determining the observed wireless communication vector. The aforementioned means may be one or more of the aforementioned components of the apparatus 2200 and/or the processing system 2310 of the apparatus 2305 configured to perform the functions recited by the aforementioned means. As described elsewhere herein, the processing system 2310 may include the TX MIMO processor 230, the receive processor 238, and/or the controller/processor 240. In one configuration, the aforementioned means may be the TX MIMO processor 230, the receive processor 238, and/or the controller/processor 240 configured to perform the functions and/or operations recited herein.

Fig. 23 is provided as an example. Other examples may differ from what is described in connection with Fig. 23.

Fig. 24 is a diagram illustrating an example 2400 of an implementation of code and circuitry for an apparatus 2405. The apparatus 2405 may be a client.

As further shown in Fig. 24, the apparatus may include circuitry for determining, using a first client autoencoder, a feature vector associated with one or more features associated with an environment of the client (circuitry 2420). For example, the apparatus may include circuitry to enable the apparatus to determine, using a first autoencoder, a feature vector associated with one or more features associated with an environment of the client.

As further shown in Fig. 24, the apparatus may include circuitry for determining a latent vector using a second autoencoder and based at least in part on the feature vector (circuitry 2425). For example, the apparatus may include circuitry to determine a latent vector using a second autoencoder and based at least in part on the feature vector.

As further shown in Fig. 24, the apparatus may include circuitry for transmitting the feature vector and the latent vector (circuitry 2430). For example, the apparatus may include circuitry to enable the apparatus to transmit the feature vector and the latent vector.

As further shown in Fig. 24, the apparatus may include, stored in computer-readable medium 2125, code for determining, using a first autoencoder, a feature vector associated with one or more features associated with an environment of the client (code 2435). For example, the apparatus may include code that, when executed by the processor 2120, may cause the processor 2120 to determine, using a first autoencoder, a feature vector associated with one or more features associated with an environment of the client.

As further shown in Fig. 24, the apparatus may include, stored in computer-readable medium 2125, code for determining a latent vector using a second autoencoder and based at least in part on the feature vector (code 2440). For example, the apparatus may include code that, when executed by the processor 2120, may cause the processor 2120 to determine a latent vector using a second autoencoder and based at least in part on the feature vector.

As further shown in Fig. 24, the apparatus may include, stored in computer-readable medium 2125, code for transmitting the feature vector and the latent vector (code 2445). For example, the apparatus may include code that, when executed by the processor 2120, may cause the transceiver 2130 to transmit the feature vector and the latent vector.

Fig. 24 is provided as an example. Other examples may differ from what is described in connection with Fig. 24.

Fig. 25 is a diagram illustrating an example 2500 of an implementation of code and circuitry for an apparatus 2505. The apparatus 2505 may be a server.

As further shown in Fig. 25, the apparatus may include circuitry for receiving, from a client, a feature vector associated with one or more features associated with an environment of the client (circuitry 2520). For example, the apparatus may include circuitry to enable the apparatus to receive, from a client, a feature vector associated with one or more features associated with an environment of the client.

As further shown in Fig. 25, the apparatus may include circuitry for receiving, from the client, a latent vector that is based at least in part on the feature vector (circuitry 2525). For example, the apparatus may include circuitry to enable the apparatus to receive, from the client, a latent vector that is based at least in part on the feature vector.

As further shown in Fig. 25, the apparatus may include circuitry for determining an observed wireless communication vector based at least in part on the feature vector and the latent vector (circuitry 2530). For example, the apparatus may include circuitry to enable the apparatus to determine an observed wireless communication vector based at least in part on the feature vector and the latent vector.

As further shown in Fig. 25, the apparatus may include circuitry for performing a wireless communication action based at least in part on determining the observed wireless communication vector (circuitry 2535). For example, the apparatus may include circuitry to enable the apparatus to perform a wireless communication action based at least in part on determining the observed wireless communication vector.

As further shown in Fig. 25, the apparatus may include, stored in computer-readable medium 2325, code for receiving, from a client, a feature vector associated with one or more features associated with an environment of the client (code 2540). For example, the apparatus may include code that, when executed by the processor 2320, may cause the transceiver 2330 to receive, from a client, a feature vector associated with one or more features associated with an environment of the client.

As further shown in Fig. 25, the apparatus may include, stored in computer-readable medium 2325, code for receiving, from the client, a latent vector that is based at least in part on the feature vector (code 2545). For example, the apparatus may include code that, when executed by the processor 2320, may cause the transceiver 2330 to receive, from the client, a latent vector that is based at least in part on the feature vector.

As further shown in Fig. 25, the apparatus may include, stored in computer-readable medium 2325, code for determining an observed wireless communication vector based at least in part on the feature vector and the latent vector (code 2550). For example, the apparatus may include code that, when executed by the processor 2320, may cause the processor 2320 to determine an observed wireless communication vector based at least in part on the feature vector and the latent vector.

As further shown in Fig. 25, the apparatus may include, stored in computer-readable medium 2325, code for performing a wireless communication action based at least in part on determining the observed wireless communication vector (code 2555). For example, the apparatus may include code that, when executed by the processor 2320, may cause the processor 2320 to perform a wireless communication action based at least in part on determining the observed wireless communication vector.

Fig. 25 is provided as an example. Other examples may differ from what is described in connection with Fig. 25.

The foregoing disclosure provides illustration and description, but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware, firmware, and/or a combination of hardware and software. As used herein, a processor is implemented in hardware, firmware, and/or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

**Claims**

1. A method of wireless communication performed by client, comprising:

   determining (1810), using a first autoencoder, a feature vector associated with one or more features associated with an environment of the client;
   determining (1820) a latent vector comprising compressed channel state feedback using a second autoencoder and based at least in part on the feature vector; and
   transmitting (1830) the feature vector and the latent vector.

2. The method of claim 1, wherein the first autoencoder comprises:

   a first encoder configured to receive an observed environmental vector as input and to provide the feature vector as output; and
   a first decoder configured to receive the feature vector as input and to provide the observed environmental vector as output.

3. The method of claim 2, wherein the second autoencoder comprises:

   a second encoder configured to receive an observed wireless communication vector and the feature vector as input and to provide the latent vector as output; and
   a second decoder configured to receive the latent vector and the feature vector as input and to provide the observed wireless communication vector as output.

4. The method of claim 1, wherein determining the feature vector comprises providing an observed environmental vector as input to the first autoencoder.

5. The method of claim 4, wherein the observed environmental vector comprises one or more feature components, wherein the one or more feature components indicate:

   a client vendor identifier,
   a client antenna configuration,
   a large scale channel characteristic,
   a channel state information reference signal configuration,
   an image obtained by an imaging device,

a portion of an estimated propagation channel, or
a combination thereof.

6. The method of claim 5, wherein the large scale channel characteristic indicates:

a delay spread associated with a channel,
a power delay profile associated with a channel,
a Doppler measurement associated with a channel,
a Doppler spectrum associated with a channel,
a signal to noise ratio associated with a channel
a signal to noise plus interference ratio associated with a channel,
a reference signal received power,
a received signal strength indicator, or
a combination thereof.

7. The method of claim 1, wherein the latent vector is associated with a wireless communication task, wherein the wireless communication task comprises:

determining channel state feedback (CSF),
determining positioning information associated with the client,
determining a modulation associated with a wireless communication,
determining a waveform associated with a wireless communication, or
a combination thereof.

8. The method of claim 7, wherein the wireless communication task comprises determining the CSF and wherein the method further comprises:

receiving a channel state information (CSI) reference signal (CSI-RS);
determining CSI based at least in part on the CSI-RS; and
providing the CSI as input to the second autoencoder.

9. The method of claim 1, wherein transmitting the feature vector and the latent vector comprises transmitting the feature vector and the latent vector using:

a physical uplink control channel,
a physical uplink shared channel, or
a combination thereof.

10. The method of claim 1, wherein at least one of the first autoencoder or the second autoencoder comprises a variational autoencoder.

11. The method of claim 1, further comprising training at least one of the first autoencoder or the second autoencoder.

12. A method of wireless communication performed by a server, comprising:

receiving, from a client, a feature vector associated with one or more features associated with an environment of the client;
receiving, from the client, a latent vector comprising compressed channel state feedback that is based at least in part on the feature vector;
determining an observed wireless communication vector based at least in part on the feature vector and the latent vector; and
performing a wireless communication action based at least in part on determining the observed wireless communication vector.

13. The method of claim 12, wherein the feature vector is based at least in part on an observed environmental vector.

14. An apparatus for wireless communication at a client, comprising:

a memory; and
one or more processors, coupled to the memory, configured to:

determine (1810), using a first autoencoder, a feature vector associated with one or more features associated with an environment of the client;
determine (1820) a latent vector comprising compressed channel state feedback using a second autoencoder and based at least in part on the feature vector; and
transmit (1830) the feature vector and the latent vector.

15. An apparatus for wireless communication at a server, comprising:

a memory; and
one or more processors, coupled to the memory, configured to:

receive, from a client, a feature vector associated with one or more features associated with an environment of the client;
receive, from the client, a latent vector comprising compressed channel state feedback that is based at least in part on the feature vector;
determine an observed wireless communication vector based at least in part on the feature vector and the latent vector; and
perform a wireless communication action based at least in part on determining the observed wireless communication vector.

**Patentansprüche**

1. Ein Verfahren für eine drahtlose Kommunikation, das durch einen Client durchgeführt wird, aufweisend:

Bestimmen (1810), unter Verwendung eines ersten Autocodierers, eines Merkmalvektors, der mit einem oder mehreren mit einer Umgebung des Clients assoziierten Merkmalen assoziiert ist,
Bestimmen (1820) eines latenten Vektors, der eine komprimierte Kanalzustand-Rückmeldung aufweist, unter Verwendung eines zweiten Autocodierers und basierend wenigstens teilweise auf dem Merkmalsvektor, und
Senden (1830) des Merkmalsvektors und des latenten Vektors.

2. Verfahren nach Anspruch 1, wobei der erste Autocodierer aufweist:

einen ersten Codierer, der konfiguriert ist zum Empfangen eines Beobachtete-Umgebung-Vektors als einer Eingabe und zum Vorsehen des Merkmalsvektors als einer Ausgabe, und
einen ersten Decodierer, der konfiguriert ist zum Empfangen des Merkmalsvektors als einer Eingabe und zum Vorsehen des Beobachtete-Umgebung-Vektors als einer Ausgabe.

3. Verfahren nach Anspruch 2, wobei der zweite Autocodierer aufweist:

einen zweiten Codierer, der konfiguriert ist zum Empfangen eines Beobachtete-Drahtloskommunikation-Vektors und des Merkmalsvektors als einer Eingabe und zum Vorsehen des latenten Vektors als einer Ausgabe, und
einen zweiten Decodierer, der konfiguriert ist zum Empfangen des latenten Vektors und des Merkmalsvektors als einer Eingabe und zum Vorsehen des Beobachtete-Drahtloskommunikation-Vektors als einer Ausgabe.

4. Verfahren nach Anspruch 1, wobei das Bestimmen des Merkmalsvektors das Vorsehen eines Beobachtete-Umgebung-Vektors als einer Eingabe zu dem ersten Autocodierer aufweist.

5. Verfahren nach Anspruch 4, wobei der Beobachtete-Umgebung-Vektor eine oder mehrere Merkmalskomponenten aufweist, wobei die eine oder die mehreren Merkmalskomponenten angeben:

einen Client-Händleridentifizierer,
eine Client-Antennenkonfiguration,
eine großformatige Kanaleigenschaft,
eine Kanalzustandsinformationen-Referenzsignalkonfiguration.

ein Bild, das durch eine Bildaufnahmevorrichtung erhalten wird,
einen Teil eines geschätzten Ausbreitungskanals, oder
eine Kombination aus diesen.

6. Verfahren nach Anspruch 5, wobei die großformatige Kanaleigenschaft angibt:

eine Verzögerungsspreizung, die mit einem Kanal assoziiert ist,
ein Leistungsverzögerungsprofil, das mit einem Kanal assoziiert ist,
eine Doppler-Messung, die mit einem Kanal assoziiert ist,
ein Doppler-Spektrum, das mit einem Kanal assoziiert ist,
ein Signal-zu-Rauschen-Verhältnis, das mit einem Kanal assoziiert ist,
ein Signal-zu-Rauschen-plus-Interferenz-Verhältnis, das mit einem Kanal assoziiert ist,
eine Referenzsignal-Empfangsleistung,
einen Empfangssignal-Stärkeindikator, oder
eine Kombination aus diesen.

7. Verfahren nach Anspruch 1, wobei der latente Vektor mit einer Drahtloskommunikationsaufgabe assoziiert ist, wobei die Drahtloskommunikationsaufgabe aufweist:

Bestimmen einer Kanalzustandsrückmeldung (Channel State Feedback bzw. CSF),
Bestimmen von mit dem Client assoziierten Positionierungsinformationen,
Bestimmen einer mit einer drahtlosen Kommunikation assoziierten Modulation,
Bestimmen einer mit einer drahtlosen Kommunikation assoziierten Wellenform, oder
einer Kombination aus diesen.

8. Verfahren nach Anspruch 7, wobei die Drahtloskommunikationsaufgabe das Bestimmen der CSF aufweist und wobei das Verfahren weiterhin aufweist:

Empfangen eines Kanalzustandsinformationen (Channel State Information bzw. CSI)-Referenzsignals (CSI-RS),
Bestimmen von CSI basierend wenigstens teilweise auf dem CSI-RS, und
Vorsehen der CSI als einer Eingabe zu dem zweiten Autocodierer.

9. Verfahren nach Anspruch 1, wobei das Senden des Merkmalsvektors und des latenten Vektors das Senden des Merkmalsvektors und des latenten Vektors unter Verwendung von Folgendem aufweist:

eines physikalischen Aufwärtsstrecke-Steuerkanals,
eines gemeinsamen physikalischen Aufwärtsstrecke-Kanals, oder
einer Kombination aus diesen.

10. Verfahren nach Anspruch 1, wobei der erste Autocodierer und/oder der zweite Autocodierer ein variationeller Autocodierer ist.

11. Verfahren nach Anspruch 1, das weiterhin das Trainieren des ersten Autocodierers und/oder des zweiten Autocodierers aufweist.

12. Ein Verfahren für eine drahtlose Kommunikation, das durch einen Server durchgeführt wird, aufweisend:

Empfangen, von einem Client, eines Merkmalsvektors, der mit einem oder mehreren mit einer Umgebung des Clients assoziierten Merkmalen assoziiert ist,
Empfangen, von dem Client, eines latenten Vektors, der eine komprimierte Kanalzustand-Rückmeldung, die wenigstens teilweise auf dem Merkmalsvektor basiert, aufweist,
Bestimmen eines Beobachtete-Drahtloskommunikation-Vektors basierend wenigstens teilweise auf dem Merkmalsvektor und dem latenten Vektor, und
Durchführen einer Drahtloskommunikationsaktion basierend wenigstens teilweise auf dem Bestimmen des Beobachtete-Drahtloskommunikation-Vektors.

13. Verfahren nach Anspruch 12, wobei der Merkmalsvektor wenigstens teilweise auf einem Beobachtete-Umgebung-Vektor basiert.

**14.** Eine Vorrichtung für eine drahtlose Kommunikation an einem Client, aufweisend:

einen Speicher, und
einen oder mehrere Prozessoren, die mit dem Speicher gekoppelt sind und konfiguriert sind zum:

Bestimmen (1810), unter Verwendung eines ersten Autocodierers, eines Merkmalvektors, der mit einem oder mehreren mit einer Umgebung des Clients assoziierten Merkmalen assoziiert ist,
Bestimmen (1820) eines latenten Vektors, der eine komprimierte Kanalzustand-Rückmeldung aufweist, unter Verwendung eines zweiten Autocodierers und basierend wenigstens teilweise auf dem Merkmalsvektor, und
Senden (1830) des Merkmalsvektors und des latenten Vektors.

**15.** Eine Vorrichtung für eine drahtlose Kommunikation an einem Server, aufweisend:

einen Speicher, und
einen oder mehrere Prozessoren, die mit dem Speicher gekoppelt sind und konfiguriert sind zum:

Empfangen, von einem Client, eines Merkmalsvektors, der mit einem oder mehreren mit einer Umgebung des Clients assoziierten Merkmalen assoziiert ist,
Empfangen, von dem Client, eines latenten Vektors, der eine komprimierte Kanalzustand-Rückmeldung, die wenigstens teilweise auf dem Merkmalsvektor basiert, aufweist,
Bestimmen eines Beobachtete-Drahtloskommunikation-Vektors basierend wenigstens teilweise auf dem Merkmalsvektor und dem latenten Vektor, und
Durchführen einer Drahtloskommunikationsaktion basierend wenigstens teilweise auf dem Bestimmen des Beobachtete-Drahtloskommunikation-Vektors.

**Revendications**

**1.** Procédé de communication sans fil effectué par un client, comprenant les étapes consistant à :

déterminer (1810), à l'aide d'un premier auto-encodeur, un vecteur de caractéristique associé à une ou plusieurs caractéristiques associées à un environnement du client :

déterminer (1820) un vecteur latent comprenant un retour d'informations d'état de canal compressée à l'aide d'un deuxième auto-encodeur et basée au moins en partie sur le vecteur de caractéristique ; et
transmettre (1830) le vecteur de caractéristique et le vecteur latent.

**2.** Le procédé selon la revendication 1, dans lequel le premier auto-encodeur comprend :

un premier codeur configuré pour recevoir un vecteur environnemental observé en entrée et pour fournir le vecteur de caractéristique en sortie ; et
un premier décodeur configuré pour recevoir le vecteur de caractéristique en entrée et pour fournir le vecteur d'environnement observé en sortie.

**3.** Le procédé selon la revendication 2, dans lequel le deuxième auto-encodeur comprend :

un deuxième codeur configuré pour recevoir un vecteur de communication sans fil observé et le vecteur de caractéristique en tant qu'entrée et pour fournir le vecteur latent en tant que sortie ; et
un deuxième décodeur configuré pour recevoir le vecteur latent et le vecteur de caractéristique en entrée et pour fournir le vecteur de communication sans fil observé en sortie.

**4.** Le procédé selon la revendication 1, dans lequel la détermination du vecteur de caractéristique comprend la fourniture d'un vecteur environnemental observé en tant qu'entrée au premier auto-encodeur.

**5.** Le procédé selon la revendication 4, dans lequel le vecteur environnemental observé comprend un ou plusieurs composants de caractéristique, dans lequel le ou les composants de caractéristique indiquent :

un identifiant de fournisseur client,
une configuration d'antenne client,
une caractéristique de canal à grande échelle.
une configuration de signal de référence d'information d'état de canal,
une image obtenue par un dispositif d'imagerie,
une partie d'un canal de propagation estimé, ou
une combinaison de ceux-ci.

6. Le procédé selon la revendication 5, dans lequel la caractéristique de canal à grande échelle indique :

un étalement de retard associé à un canal,
un profil de retard de puissance associé à un canal,
une mesure Doppler associée à un canal,
un spectre Doppler associé à un canal,
un rapport signal sur bruit associé à un canal,
un rapport signal sur bruit plus interférence associé à un canal,
une puissance reçue de signal de référence,
un indicateur d'intensité de signal reçu, ou
une combinaison de ceux-ci.

7. Le procédé selon la revendication 1, dans lequel le vecteur latent est associé à une tâche de communication sans fil, dans lequel la tâche de communication sans fil comprend :

la détermination du retour d'informations d'état de canal (CSF),
la détermination des informations de positionnement associées au client,
la détermination d'une modulation associée à une communication sans fil,
la détermination d'une forme d'onde associée à une communication sans fil, ou
une combinaison de ces éléments.

8. Le procédé selon la revendication 7, dans lequel la tâche de communication sans fil comprend la détermination du CSF et dans lequel le procédé comprend en outre :

la réception d'un signal de référence (CSI-RS) d'informations d'état de canal (CSI) ;
la détermination de la CSI sur la base au moins en partie du CSI-RS ; et
la fourniture de la CSI en tant qu'entrée au deuxième auto-encodeur.

9. Le procédé de la revendication 1, dans lequel la transmission du vecteur de caractéristique et du vecteur latent comprend la transmission du vecteur de caractéristique et du vecteur latent en utilisant :

un canal de commande de liaison montante physique,
un canal partagé de liaison montante physique ou
une combinaison de ceux-ci.

10. Le procédé selon la revendication 1, dans lequel au moins l'un du premier auto-encodeur ou du deuxième auto-encodeur comprend un auto-encodeur variationnel.

11. Le procédé selon la revendication 1, comprenant en outre l'apprentissage d'au moins l'un parmi le premier auto-encodeur ou le deuxième auto-encodeur.

12. Procédé de communication sans fil effectué par un serveur, comprenant les étapes consistant à :

recevoir, d'un client, un vecteur de caractéristiques associé à une ou plusieurs caractéristiques associées à un environnement du client ;
recevoir, du client, un vecteur latent comprenant un retour d'informations d'état de canal compressée qui est basée au moins en partie sur le vecteur de caractéristique ;
déterminer un vecteur de communication sans fil observé basé au moins en partie sur le vecteur de caractéristique et le vecteur latent ; et

effectuer une action de communication sans fil basée au moins en partie sur la détermination du vecteur de communication sans fil observé.

**13.** Procédé selon la revendication 12, dans lequel le vecteur de caractéristique est basé au moins en partie sur un vecteur environnemental observé.

**14.** Un appareil de communication sans fil au niveau d'un client, comprenant :

une mémoire ; et
un ou plusieurs processeurs, couplés à la mémoire, configurés pour :
déterminer (1810), à l'aide d'un premier auto-encodeur, un vecteur de fonction associé à une ou plusieurs fonctions associées à un environnement du client :

déterminer (1820) un vecteur latent comprenant un retour d'informations d'état de canal compressée en utilisant un deuxième auto-encodeur et basé au moins en partie sur le vecteur de caractéristique ; et transmettre (1830) le vecteur de caractéristique et le vecteur latent.

**15.** Un appareil de communication sans fil au niveau d'un serveur, comprenant :

une mémoire ; et
un ou plusieurs processeurs, couplés à la mémoire, configurés pour :

recevoir, d'un client, un vecteur de caractéristique associé à une ou plusieurs caractéristiques associées à un environnement du client ;
recevoir, du client, un vecteur latent comprenant un retour d'informations d'état de canal compressée qui est basée au moins en partie sur le vecteur de caractéristique ;
déterminer un vecteur de communication sans fil observé basé au moins en partie sur le vecteur de caractéristique et le vecteur latent : et
effectuer une action de communication sans fil basée au moins en partie sur la détermination du vecteur de communication sans fil observé.

FIG. 1

**FIG. 2**

**FIG. 3**

EP 4 200 755 B1

FIG. 4

**FIG. 5**

**FIG. 6**

EP 4 200 755 B1

700

| Server 705 | Client 710 | Client 715 |
|---|---|---|

Neural Network Parameters
720

Neural Network Parameters
720

Determine Updated Neural
Network Parameters
725

Updated Neural Network Parameters
730

Determine
Updated
Neural
Network
Parameters
735

Updated Neural Network Parameters
740

Determine Final Updated
Neural Network Parameters
745

**FIG. 7**

EP 4 200 755 B1

**FIG. 8**

**FIG. 9**

EP 4 200 755 B1

1000

1005 ⌇ Select set of clients from which to receive updates

1010 ⌇ Transmit set of neural network parameters to set of clients

1015 ⌇ Receive plurality of sets of updated neural network parameters from set of clients

1020 ⌇ Determine final set of updated neural network parameters

1025 ⌇ Return to block 1005

**FIG. 10**

1100 →

| 1105 | Receive neural network parameters from server |

| 1110 | Obtain observed environmental training vector and observed wireless communication training vector |

| 1115 | Determine loss for first client autoencoder |

| 1120 | Determine loss for second client autoencoder |

| 1125 | Update set of autoencoder parameters associated with the first client autoencoder |

| 1130 | Repeat Operations 1110 – 1125 a specified number of times |

| 1135 | Provide updated set of autoencoder parameters associated with the first client autoencoder to server |

**FIG. 11**

EP 4 200 755 B1

1200

1205 — Receive neural network parameters from server

1210 — Obtain observed environmental training vector and determine feature training vector

1215 — Obtain observed wireless communication training vector

1220 — Determine loss for second client autoencoder

1225 — Update set of autoencoder parameters associated with the second client autoencoder

1230 — Repeat Operations 1210 – 1225 a specified number of times

1235 — Provide updated set of autoencoder parameters associated with the second client autoencoder to server

**FIG. 12**

EP 4 200 755 B1

EP 4 200 755 B1

1300

1305 — Select set of clients from which to receive updates

1310 — Transmit set of neural network parameters to set of clients

1315 — Receive plurality of sets of updated autoencoder parameters associated with the first client autoencoder from set of clients

1320 — Determine final set of updated autoencoder parameters associated with the first client autoencoder

1325 — Return to block 1305

FIG. 13

1400 →

1405 — Select set of clients from which to receive updates

1410 — Transmit set of neural network parameters to set of clients

1415 — Receive plurality of sets of updated autoencoder parameters associated with the second client autoencoder from set of clients

1420 — Determine final set of updated autoencoder parameters associated with the second client autoencoder

1425 — Return to block 1405

**FIG. 14**

EP 4 200 755 B1

1500 →

EP 4 200 755 B1

| | |
|---|---|
| 1505 | Receive neural network parameters from server |

↓

| | |
|---|---|
| 1510 | Obtain observed environmental training vector and determine feature training vector |

↓

| | |
|---|---|
| 1515 | Obtain observed wireless communication training vector |

↓

| | |
|---|---|
| 1520 | Determine loss for second client autoencoder |

↓

| | |
|---|---|
| 1525 | Update set of autoencoder parameters associated with the second client autoencoder |

↓

| | |
|---|---|
| 1530 | Repeat Operations 1510 – 1525 a specified number of times |

↓

| | |
|---|---|
| 1535 | Provide updated set of autoencoder parameters associated with the second client autoencoder to server |

**FIG. 15**

EP 4 200 755 B1

1600 ⟶

1605 ∿ ⎡ Select set of clients from which to receive observed environmental training vectors ⎤

1610 ∿ ⎡ Receive observed environmental training vectors from set of clients ⎤

1615 ∿ ⎡ Determine loss for the first client autoencoder ⎤

1620 ∿ ⎡ Determine final subset of updated autoencoder parameters associated with the first client autoencoder ⎤

1625 ∿ ⎡ Repeat Operations 1610 – 1620 a specified number of times ⎤

1630 ∿ ⎡ Return to block 1605 ⎤

**FIG. 16**

1700 →

1705 — Select set of clients from which to receive updates

1710 — Transmit set of neural network parameters to set of clients

1715 — Receive plurality of sets of updated autoencoder parameters associated with the second client autoencoder from set of clients

1720 — Determine final set of updated autoencoder parameters associated with the second client autoencoder

1725 — Return to block 1705

**FIG. 17**

EP 4 200 755 B1

1800 →

1810 ⌇ Determine, using a first client autoencoder, a feature vector associated with one or more features associated with an environment of the client

1820 ⌇ Determine a latent vector using a second client autoencoder and based at least in part on the feature vector

1830 ⌇ Transmit the feature vector and the latent vector

**FIG. 18**

EP 4 200 755 B1

1900 →

1910 ⌇ Receive, from a client, a feature vector associated with one or more features associated with an environment of the client

↓

1920 ⌇ Receive, from the client, a latent vector that is based at least in part on the feature vector

↓

1930 ⌇ Determine an observed wireless communication vector based at least in part on the feature vector and the latent vector

↓

1940 ⌇ Perform a wireless communication action based at least in part on determining the observed wireless communication vector

**FIG. 19**

EP 4 200 755 B1

2000

```
┌──────────────────────────────────────────────────────────────────┐
│                                                                    │
│     ┌────────────────────────────────────────────────┐◄───────────┼──┐
│     │         Reception Component 2002                │            │  │
│     └────────────────────────────────────────────────┘            │  │
│                          │                                         │  │
│                          ▼                                         │  │
│              ┌────────────────────────┐                            │  │
│              │                        │                            │  │
│              │     Communication      │                            │  │
│              │       Manager          │                            │  │
│              │       2004             │                            │  │
│              │                        │                            │  │
│              └────────────────────────┘                            │  │
│                          │                                         │  │
│                          ▼                                         │  │
│     ┌────────────────────────────────────────────────┐       ┌────┴──┐
│     │       Transmission Component 2006              │──────►│ 2008  │
│     └────────────────────────────────────────────────┘       └───────┘
│                                                                    │
└────────────────────────────────────────────────────────────────────┘
```

**FIG. 20**

**FIG. 21**

EP 4 200 755 B1

2200

Reception Component 2202

Communication
Manager
2204

Transmission Component 2206

2208

**FIG. 22**

EP 4 200 755 B1

2305 ⟶

**Processing System**
**2310**

┌─────────────────────────────┐        ┌─────────────────────────────┐
│ Reception Component          │◄──────►│ Communication Manager       │
│ 2202                         │        │ 2204                        │
└─────────────────────────────┘        └─────────────────────────────┘

┌─────────────────────────────┐
│ Transmission Component       │◄───────
│ 2206                         │
└─────────────────────────────┘

2335

┌──────────────────┐
│ Transceiver      │◄──────
│ 2330             │
└──────────────────┘

2315

┌──────────────────┐        ┌─────────────────────────────┐
│ Processor        │        │ Computer-Readable           │
│ 2320             │        │ Medium / Memory             │
│                  │        │ 2325                        │
└──────────────────┘        └─────────────────────────────┘

**FIG. 23**

**2405** ─────→

**Processing System**
**2110**

**2420** ──────┤ Circuitry for determining, using a first autoencoder, a feature vector associated with one or more features associated with an environment of the client

**2425** ──── Circuitry for determining a latent vector using a second autoencoder and based at least in part on the feature vector

**2430** ──── Circuitry for transmitting the feature vector and the latent vector

**Computer-Readable Medium / Memory**
**2125**

Code for determining, using a first autoencoder, a feature vector associated with one or more features associated with an environment of the client ──── **2435**

Code for determining a latent vector using a second autoencoder and based at least in part on the feature vector ──── **2440**

Code for transmitting the feature vector and the latent vector ──── **2445**

**2135**

**Transceiver 2130**

**2115**

**Processor 2120**

**FIG. 24**

EP 4 200 755 B1

**2505** ⟶

### Processing System 2310

**2520** ⟶ | Circuitry for receiving, from a client, a feature vector associated with one or more features associated with an environment of the client |

**2525** ⟶ | Circuitry for receiving, from the client, a latent vector that is based at least in part on the feature vector |

**2530** ⟶ | Circuitry for determining an observed wireless communication vector based at least in part on the feature vector and the latent vector |

**2535** ⟶ | Circuitry for performing a wireless communication action based at least in part on determining the observed wireless communication vector |

2315

### Computer-Readable Medium / Memory 2325

| Code for receiving, from a client, a feature vector associated with one or more features associated with an environment of the client | ⟶ **2540**

| Code for receiving, from the client, a latent vector that is based at least in part on the feature vector | ⟶ **2545**

| Code for determining an observed wireless communication vector based at least in part on the feature vector and the latent vector | ⟶ **2550**

| Code for performing a wireless communication action based at least in part on determining the observed wireless communication vector | ⟶ **2555**

**2335**

### Transceiver 2330

### Processor 2320

## FIG. 25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GR 20200100498

- US 2019287217 A

### Non-patent literature cited in the description

- **HONGYUAN YE et al.** Deep Learning based Denoise Network for CSI Feedback in FDD Massive MIMO Systems. *ARXIV.ORG*, 16 April 2020